(19) Europäisches Patentamt / European Patent Office / Office européen des brevets

(11) **EP 2 645 194 B1**

(12) **EUROPEAN PATENT SPECIFICATION**

(45) Date of publication and mention of the grant of the patent:
**23.05.2018 Bulletin 2018/21**

(51) Int Cl.:
**G01P 3/68** *(2006.01)*    **G01P 3/80** *(2006.01)*
**G05B 23/00** *(2006.01)*    **B65H 61/00** *(2006.01)*
**B65H 63/06** *(2006.01)*

(21) Application number: **13157484.0**

(22) Date of filing: **01.03.2013**

(54) **Yarn travelling information acquiring device, yarn processing device, and yarn information acquiring method**

Erfassungsvorrichtung für Garnverlaufsinformation, Garnverarbeitungsvorrichtung und Erfassungsverfahren für Garninformation

Dispositif d'acquisition d'informations de déplacement de fil, dispositif de traitement de fil et procédé d'acquisition d'informations de fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2012 JP 2012073814**

(43) Date of publication of application:
**02.10.2013 Bulletin 2013/40**

(73) Proprietor: **Murata Machinery, Ltd.**
**Kyoto-shi, Kyoto 601-8326 (JP)**

(72) Inventor: **Minamino, Katsushi**
**Kyoto, Kyoto 612-8686 (JP)**

(74) Representative: **Weickmann & Weickmann PartmbB**
**Postfach 860 820**
**81635 München (DE)**

(56) References cited:
**EP-A2- 2 090 538**    **EP-A2- 2 423 144**

**Description**

BACKGROUND OF THE INVENTION

1. Field of the Invention

The present invention relates to a yarn travelling information acquiring device for detecting a state of a travelling yarn and a yarn processing device equipped with the yarn travelling information acquiring device.

2. Description of the Related Art

In a yarn winding device for winding a yarn, information relating to a travelling state of the yarn is sometimes necessary to control the winding of the yarn. Such a yarn winding device thus includes a yarn travelling information acquiring device for acquiring information relating to the travelling state of the yarn (yarn travelling information). The travelling state may include, for example, a travelling speed of the yarn.

Such yarn travelling information acquiring device is described, for example, in Japanese Unexamined Patent Publication No. 2012-051672. The yarn travelling information acquiring device disclosed in the document includes two yarn thickness unevenness sensors for detecting yarn thickness unevenness, and the signals detected by the two yarn thickness unevenness sensors are sampled at a predetermined sampling period (cycle). The yarn travelling information acquiring devices detect the yarn travelling speed by comparing the two obtained yarn thickness unevenness signals

EP 2 423 144 A2 already discloses a yarn travelling information acquiring device comprising:

a first detecting section adapted to detect a thickness unevenness of a travelling yarn and to output first yarn thickness unevenness signals; a second detecting section arranged upstream in a yarn travelling direction at a distance from the first detecting section, and adapted to detect the thickness unevenness of the yarn and to output second yarn thickness unevenness signals;

with a similarity degree evaluating section adapted to use a first imaginary frame and a second imaginary frame to select a plurality of reference positions of the first imaginary frame on a time axis of the second imaginary frame, and to evaluate a plurality of similarity degrees of the first yarn thickness unevenness signals and a second yarn thickness unevenness signals, the first imaginary frame being formed in accordance with the first yarn thickness unevenness signals extracted from the first yarn thickness unevenness signals acquired within a first time range, and the second imaginary frame being formed in accordance with the second yarn thickness unevenness signals extracted from the second yarn thickness unevenness signals acquired within a second time range that is longer than the first time range and a travelling information acquiring section adapted to calculate a time delay between the first yarn thickness unevenness signals forming the first imaginary frame and the second yarn thickness unevenness signals forming the second imaginary frame in accordance with the similarity degrees, and to acquire travelling information of the yarn in accordance with the distance and the time delay.

Further this document discloses a weighting processing section adapted to apply a weighting factor designated by a weighting curve, extracts travelling information in form of at least one of travelling speed, fixed -length pulse, moved length or time delay, and a yarn processing device having a control section receiving the travelling information.

Similar disclosure can be found in EP 2 090 538 A2.

BRIEF SUMMARY OF THE INVENTION

For example, since the yarn winding machine winds a yarn having a very long length, the error in the length of the wound yarn becomes large even if the error in the detection of the yarn travelling speed by the yarn travelling information acquiring device is very small. The yarn travelling information acquiring device capable of more accurately acquiring the travelling state of the yarn is desired. However, if the resolution is simply increased, the processing amount increases and this is not preferable for the yarn travelling information acquiring device.

It is an object of the present invention to provide a yarn travelling information acquiring device capable of accurately acquiring the travelling state of the yarn while reducing the processing load.

A yarn travelling information acquiring device according to an embodiment of the present invention includes a first detecting section, a second detecting section, a similarity degree evaluating section, and a travelling information acquiring section. The first detecting section is adapted to detect a thickness unevenness of a travelling yarn and to output first yarn thickness unevenness signals . The second detecting section is arranged at a predetermined distance from the first detecting section in a yarn travelling direction, and is adapted to detect the thickness unevenness of the yarn and to output second yarn thickness unevenness signals. The similarity degree evaluating section is adapted to use a first imaginary frame and a second imaginary frame to select a plurality of positions of the first imaginary frame on a time axis of the second imaginary frame within a second time range, and to evaluate a plurality of similarity degrees of the first yarn thickness unevenness signals and the second yarn thickness unevenness signals. The first imaginary frame is formed in accordance with the first yarn thickness unevenness signals extracted from the first yarn thickness unevenness signals acquired within a predetermined first time range. The second imaginary frame is formed in accordance with the second yarn thickness unevenness signals extracted from the second yarn thickness unevenness signals acquired within the second time range that is longer than the first time range. The travelling information acquiring section is adapted to calculate a time delay between the first yarn thickness unevenness signals and the second yarn thickness unevenness signals in accordance with the similarity degrees, and to acquire travelling information of the yarn in accordance with the predetermined distance and the time delay.

Therefore, since the signals are extracted from the first yarn thickness unevenness signals and the second yarn thickness unevenness signals to create the first imaginary frame and the second imaginary frame, the number of signals of the first yarn thickness unevenness signals and the second yarn thickness unevenness signals within the first imaginary frame and the second imaginary fame can be reduced. The processing load in calculating the similarity degree can be reduced by obtaining the similarity degree using the first imaginary frame and the second imaginary frame in which the number of signals is reduced. Therefore, even if the acquiring number of the first yarn thickness unevenness signals and the second yarn thickness unevenness signals is increased to increase the resolution, the load in calculating the similarity degree can be reduced. Accordingly, the travelling state of the yarn can be accurately acquired while reducing the processing load in the yarn travelling information acquiring device according to an embodiment of the present invention.

The yarn travelling information acquiring device further includes a sampling speed acquiring section adapted to acquire a sampling speed of the yarn. The similarity degree evaluating section is adapted to change according to the sampling speed at least one of a first extracting condition for extracting the first yarn thickness unevenness signals that form the first imaginary frame and a second extracting condition for extracting the second yarn thickness unevenness signals that form the second imaginary frame. In this case, a more appropriate first imaginary frame and/or second imaginary frame according to the sampling speed can be obtained. The similarity degree thus can be more appropriately calculated.

The yarn travelling information acquiring device further includes a weighting processing section. The weighting processing section is adapted to carry out a weighting processing using a weighting factor designated by a weighting curve according to a reference delay amount of the first yarn thickness unevenness signal and the second yarn thickness unevenness signal, and a speed ratio, which is a ratio of the calculated delay amount with respect to the reference delay amount for a plurality of similarity degrees obtained by the similarity degree evaluating section, and to calculate a plurality of weighted similarity degrees. The travelling information acquiring section is adapted to acquire the travelling information in accordance with the weighted similarity degrees on which the weighting processing has been carried out by the weighting processing section. Through the use of the weighting curve corresponding to the speed ratio, the weighting processing can be more accurately performed and the travelling state of the yarn can be more accurately acquired.

The yarn processing device preferably includes the yarn travelling information acquiring device described above, a yarn processing section adapted to perform processing on the yarn, and a control section adapted to control the processing performed by the yarn processing section based on the travelling information of the yarn acquired by the yarn travelling information acquiring device. In this case, the yarn processing section can be controlled using accurate travelling information of the yarn acquired by the yarn travelling information acquiring device.

According to the present invention, the travelling state of the yarn can be accurately acquired while reducing the processing load.

BRIEF DESCRIPTION OF THE DRAWINGS

FIG. 1 is a side view of a winder unit;
FIG. 2 is a front view of the winder unit;
FIG. 3 is a block diagram illustrating a configuration of a clearer;
FIGS. 4 are graphs illustrating data series accumulated in a ring buffer;
FIG. 5 is a view for describing a calculation frame;
FIG. 6 is a view describing bias component removal and normalization;
FIG. 7 is a graph illustrating a case in which a plurality of peaks of similarity degrees exist;
FIG. 8 is a graph in which only maximum points of the similarity degrees are extracted;
FIG. 9 is a flowchart of yarn travelling speed acquiring processing;
FIG. 10 is a flowchart of an adoption determination processing;

FIG. 11 is a view for describing weighting by a weighting curve;

FIG. 12A and FIG. 12B are graphs illustrating examples in which the weighting is performed on the similarity degree;

FIG. 13 is a view illustrating a state in which a downstream frame is moved;

FIG. 14A to FIG. 14D are views illustrating a calculation procedure for calculating a history weighting curve; and

FIG. 15A to FIG. 15C are views illustrating a procedure for calculating a sampling speed weighting curve.

## DETAILED DESCRIPTION OF PREFERRED EMBODIMENTS

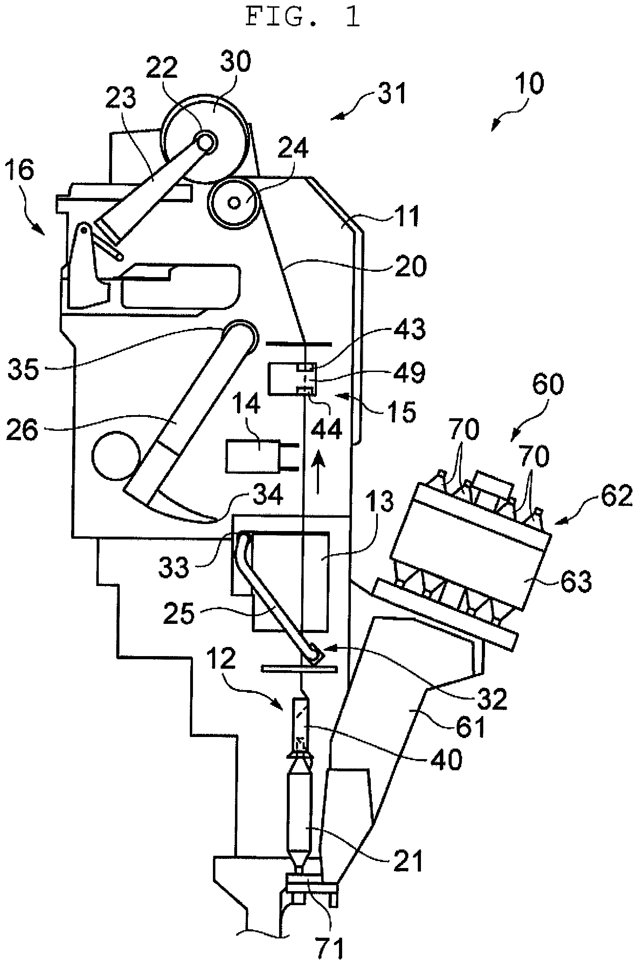

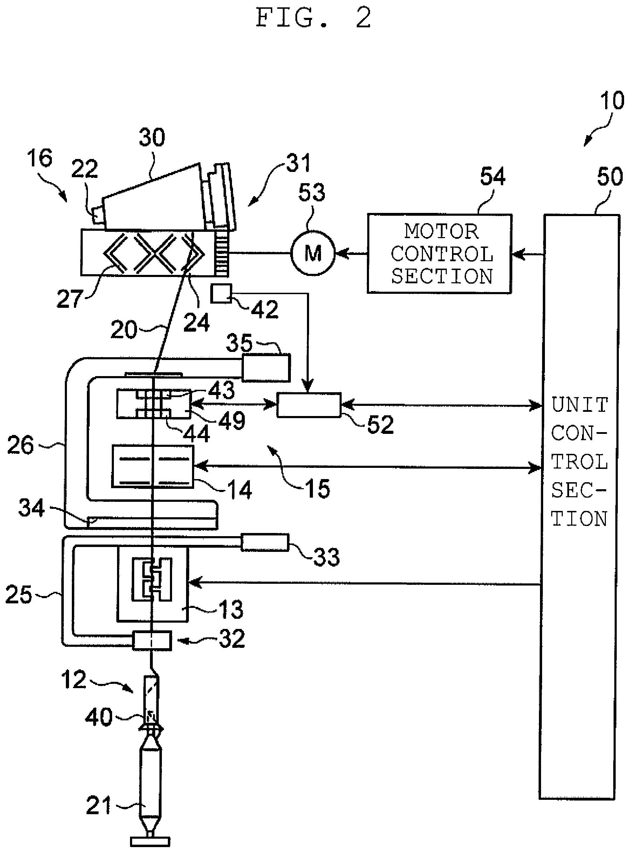

Preferred embodiments of the present invention will be described below with reference to the drawings. FIG. 1 is a side view of a winder unit (yarn processing device) 10 arranged in an automatic winder according to one embodiment of the present invention. FIG. 2 is a front view illustrating a schematic configuration of the winder unit 10.

The winder unit 10 illustrated in FIG. 1 and FIG. 2 unwinds a spun yarn 20 from a yarn supplying bobbin 21 and winds the spun yarn 20 around a winding bobbin 22 while traversing the spun yarn 20 to form a package 30 of a prescribed length and a prescribed form. The automatic winder of the present embodiment includes a plurality of winder units 10 arranged in a line, and a main control device (not illustrated) arranged at one end in a direction in which the winder units 10 are arranged.

Each of the winder units 10 includes a unit frame 11 (FIG. 1) arranged on a left or right side in front view, and a winding unit main body 16 arranged at a side of the unit frame 11. The winding unit main body (yarn processing section) 16 includes a winding section 31. The winding unit main body 16 includes a magazine-type supplying device 60, and a supplying bobbin holding section 71.

As illustrated in FIG. 1, the magazine-type supplying device 60 includes a magazine holding section 61 that extends diagonally from a lower part of the winder unit 10 towards an upward direction and towards the front, and a bobbin accommodating device 62 that is attached to a distal end of the magazine holding section 61. The bobbin accommodating device 62 includes a magazine can 63. A plurality of accommodation holes to which the yarn supplying bobbins 70 can be respectively set are formed in the magazine can 63. The magazine can 63 can be intermittently driven, rotated, and fed by a motor (not illustrated), and the supply bobbins 70 can be dropped one at a time to a bobbin supply path (not illustrated) of the magazine holding section 61 by the intermittent drive and a control valve (not illustrated) of the magazine can 63. The supply bobbin 70 is then guided to the supplying bobbin holding section 71.

In place of the magazine-type supplying device 60 illustrated in FIG. 1, a transport conveyor (not illustrated) arranged at a lower part of the automatic winder may be used to supply the yarn supplying bobbin 21 from a yarn supplying bobbin supplying section (not illustrated) to the supplying bobbin holding section 71 of each winder unit 10.

The winding section 31 winds the yarn 20, which has been unwound from the yarn supplying bobbin 21, around the winding bobbin 22 to form the package 30. Specifically, the winding section 31 includes a cradle 23 configured capable of holding the winding bobbin 22, and a winding drum 24 for traversing the spun yarn 20 and driving the winding bobbin 22. The cradle 23 can be swung in a direction of approaching or separating with respect to the winding drum 24. The package 30 is thus brought into contact with or separated from the winding drum 24. As illustrated in FIG. 2, a spiral-shaped traverse groove 27 is formed on an outer circumferential surface of the winding drum 24, and the spun yarn 20 is traversed by the traverse groove 27.

The winding bobbin 22 is rotated by driving and rotating the winding drum 24 arranged facing the winding bobbin 22. The spun yarn 20 is wound around the rotating winding bobbin 22 while being traversed by the traverse groove 27. As illustrated in FIG. 2, the winding drum 24 is coupled to an output shaft of a drum drive motor 53. An operation of the drum drive motor 53 is controlled by a motor control section 54. The motor control section 54 performs control to operate and stop the drum drive motor 53 in response to a control signal from a unit control section (control section) 50.

A rotation sensor 42 is attached to the winding drum 24. The rotation sensor 42 is electrically connected to an analyzer 52 or the like of a clearer 15, to be described later. The rotation sensor 42 is configured as a rotary encoder, for example, and transmits a pulse signal to the analyzer 52 every time the winding drum 24 rotates by a prescribed angle. The pulse signal output by the rotation sensor 42 is referred to as a rotation pulse signal.

The winding unit main body 16 has a configuration in which an unwinding assisting device 12, a tension applying device 13, a yarn joining device 14, a clearer head 49 of the clearer (yarn travelling information acquiring device) 15 are arranged in this order from the yarn supplying bobbin 21 side on a yarn travelling path between the yarn supplying bobbin 21 and the winding drum 24.

The unwinding assisting device 12 assists the unwinding of the spun yarn 20 from the yarn supplying bobbin 21 by lowering a regulating member 40 covering a core tube of the yarn supplying bobbin 21 accompanying unwinding of the spun yarn 20 from the yarn supplying bobbin 21. The regulating member 40 makes contact with a balloon that is formed at an upper part of the yarn supplying bobbin 21 when the spun yarn 20 unwound from the yarn supplying bobbin 21 is swung around, thus applying an appropriate tension to the balloon and assisting unwinding of the spun yarn 20.

The tension applying device 13 applies a prescribed tension to the travelling spun yarn 20. The tension applying device 13 applies constant tension to the spun yarn 20, thereby improving quality of the package 30.

The clearer 15 detects defects by detecting thickness unevenness of the spun yarn 20 with an appropriate sensor. Specifically, the clearer 15 includes the clearer head 49 and the analyzer 52 (FIG. 2). Two yarn unevenness detecting sensors 43 and 44 are arranged in the clearer head 49. Yarn defects such as slub can be detected by processing signals from the yarn unevenness detecting sensors 43 and 44 by the analyzer 52. A cutter (not illustrated) for immediately cutting the spun yarn 20 when the clearer 15 detects a yarn defect is arranged in proximity to the clearer head 49.

The clearer 15 may also function as a yarn travelling information acquiring device for acquiring travelling information of the spun yarn 20. The travelling information of the spun yarn 20 is information indicating a state of the travelling spun yarn 20. The configuration for acquiring the travelling information of the spun yarn 20 by the clearer 15 will be described later.

After the clearer 15 detects a yarn defect and cuts the spun yarn 20, or after a yarn breakage during unwinding of the spun yarn 20 from the yarn supplying bobbin 21, and the like, the yarn joining device 14 joins a lower yarn from the yarn supplying bobbin 21 and an upper yarn from the package 30. The yarn joining device 14 may be a mechanical-type or a type that uses fluid such as compressed air.

A lower yarn guiding pipe 25 adapted to catch and guide the lower yarn from the yarn supplying bobbin 21 and an upper yarn guiding pipe 26 adapted to catch and guide the upper yarn from the yarn supplying bobbin 30 are arranged on the lower side and the upper side, respectively, of the yarn joining device 14. A suction port 32 is formed at a tip end of the lower yarn guiding pipe 25. A suction mouth 34 is arranged at a tip end of the upper yarn guiding pipe 26. The lower yarn guiding pipe 25 and the upper yarn guiding pipe 26 are respectively connected to an appropriate negative pressure source (not illustrated), and a suction flow can be generated at the suction port 32 and the suction mouth 34.

At the time of yarn cut or yarn breakage, the suction port 32 of the lower yarn guiding pipe 25 catches the lower yarn at a position illustrated in FIG. 1 and FIG. 2, and is thereafter swung upward around a shaft 33 to guide the lower yarn to the yarn joining device 14. Almost at the same time, the upper yarn guiding pipe 26 is swung upward around a shaft 35 from the illustrated position to catch, with the suction mouth 34, the upper yarn unwound from the package 30. Subsequently, the upper yarn guiding pipe 26 is swung downward around the shaft 35 to guide the upper yarn to the yarn joining device 14. The yarn joining operation of the lower yarn and the upper yarn is then carried out by the yarn joining device 14.

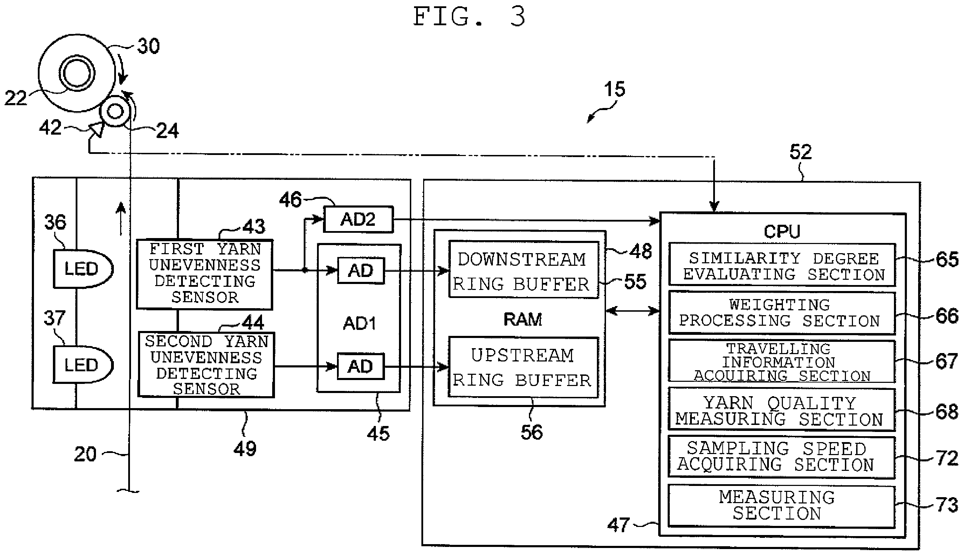

Next, the clearer 15 will be described in detail with reference to FIG. 3.

As illustrated in FIG. 3, the clearer head 49 includes a first yarn unevenness detecting sensor (first detecting section) 43, a second yarn unevenness detecting sensor (second detecting section) 44 and two A/D converters 45 and 46. The analyzer 52 is configured by hardware such as a Central Processing Unit (CPU) 47, a Random Access Memory (RAM) 48, and a Read Only Memory (ROM) (not illustrated), and software such as program stored in the ROM. The hardware and the software cooperate to cause the CPU 47 to function as a similarity degree evaluating section 65, a weighting processing section 66, a travelling information acquiring section 67, a yarn quality measuring section 68, a sampling speed acquiring section 72, a measuring section 73, and the like. The pulse signals from the rotation sensor 42 are input to the analyzer 52.

The first yarn unevenness detecting sensor 43 and the second yarn unevenness detecting sensor 44 are arranged at a prescribed interval in a yarn travelling direction. The first yarn unevenness detecting sensor 43 is arranged downstream and the second yarn unevenness detecting sensor 44 is arranged upstream. In the present embodiment, the yarn unevenness detecting sensors 43 and 44 are adapted to detect thickness unevenness of the spun yarn 20. Specifically, the yarn unevenness detecting sensors 43 and 44 are configured as optical sensors. Light Emitting Diodes (LED) 36 and 37 are arranged as light sources on an opposite side of the yarn unevenness detecting sensors 43 and 44, respectively, with a yarn path of the spun yarn 20 therebetween. The yarn unevenness detecting sensors 43 and 44 detect a light receiving amount of the light transmitted from the LEDs 36 and 37, respectively. Since the light receiving amount of the yarn unevenness detecting sensors 43 and 44 changes when the thickness of the travelling spun yarn 20 changes, the clearer 15 can detect the thickness unevenness of the spun yarn 20. The output signals (yarn thickness unevenness signals) from the yarn unevenness detecting sensors 43 and 44 are Analog-to-Digital (A/D) converted, and then output to the analyzer 52.

The CPU 47 arranged in the analyzer 52 monitors the A/D converted yarn thickness unevenness signals and measures the quality of the spun yarn 20. For example, because the thickness of the spun yarn 20 is found to be abnormal in a portion where the quality of the spun yarn 20 has a problem, the defect of the spun yarn 20 can be detected by detecting the abnormality in the thickness of the spun yarn 20 by the CPU 47. Since the quality of the spun yarn 20 is measured by the CPU 47, the CPU 47 thus can be referred to be functioning as the yarn quality measuring section 68.

The yarn supplying bobbin 21 normally has a yarn spun by a ring spinning machine. Slight thickness unevenness may periodically occur in such a yarn. The cause of the periodic yarn thickness unevenness may include core shift of a draft roller that drafts a sliver in the ring spinning machine. The periodic thickness unevenness in a spinning process causes moire to be generated in a woven cloth in the subsequent weaving process. The CPU 47 serving as the yarn quality measuring section 68 performs a Fast Fourier Transform (FFT) calculation of the yarn thickness unevenness signal to detect the periodic thickness unevenness of the spun yarn 20. In order to accurately perform the FFT calculation, the number of waveform data per unit length of the spun yarn 20 is required to be accurately made constant when sampling the yarn thickness unevenness signal in the A/D converter.

The CPU 47 of the present embodiment acquires information relating to a travelling state of the spun yarn 20, and changes a sampling period (cycle) of the second A/D converter 46 according to the travelling state. Specifically, the CPU 47 generates a pulse signal each time the spun yarn 20 travels a specific length (e.g., 1 mm), and transmits the pulse signal to the second A/D converter 46. This pulse signal is referred to as a fixed yarn length pulse signal. Based on this fixed yarn length pulse signal, the second A/D converter 46 samples the analog signals from the first yarn unevenness detecting sensor 43, and converts the analog signals into digital signals. Accordingly, since the number of data per unit length of the spun yarn 20 can be accurately maintained constant, the FFT calculation can be accurately performed in the CPU 47 and the periodic thickness unevenness can be reliably detected. By accurately maintaining the number of data per unit length of the spun yarn 20 constant, the CPU 47 can accurately perform an evaluation of the length of the thickness unevenness of the spun yarn 20 even with a sporadic yarn defect without periodicity, and the detection accuracy of the analyzer 52 can be improved. Since the fixed yarn length pulse signal is information relating to the travelling state of the yarn 20, the fixed yarn length pulse signal can be referred to as one type of yarn travelling information. As described above, since the CPU 47 acquires the yarn travelling information, the CPU 47 may be referred to be functioning as the travelling information acquiring section 67.

Next, the configuration for acquiring the fixed yarn length pulse signal will be described.

The clearer 15 of the present embodiment includes the first A/D converter 45 apart from the second A/D converter 46.

The first A/D converter 45 is an A/D converter which performs sampling of the yarn thickness unevenness signal in order to acquire the fixed yarn length pulse signal by the CPU 47. Specifically, the first A/D converter 45 samples the analog signals from the two yarn unevenness detecting sensors 43 and 44, and converts the analog signals to digital signals. The obtained digital signals are input into the analyzer 52. The CPU 47 arranged in the analyzer 52 functions as the similarity degree evaluating section 65, the weighting processing section 66, and/or the travelling information acquiring section 67 to detect a travelling speed of the spun yarn 20 using the input digital signals. The travelling speed of the spun yarn 20 is also information relating to the travelling state of the spun yarn 20, and thus can be referred to as one type of yarn travelling information. The CPU 47 may be referred to be functioning as the travelling information acquiring section 67.

If the travelling speed of the spun yarn 20 is obtained, the travelled length of the spun yarn 20 within a prescribed period of time can be detected in accordance with the travelling speed. The CPU 47 generates and acquires the fixed yarn length pulse signal in accordance with the travelling speed of the spun yarn 20, and transmits the fixed yarn length pulse signal to the second A/D converter 46. The yarn thickness unevenness signal can be sampled for every fixed yarn length of the spun yarn 20 in the second A/D converter 46.

Next, a method for acquiring the travelling speed (yarn travelling information) of the spun yarn 20 by the clearer 15 will be described in detail.

First, in the first A/D converter 45, the analog waveforms output from the yarn unevenness detecting sensors 43 and 44 are sampled. A sampling frequency fs1 at this time is changed as needed in proportion to a rotation speed of the winding drum 24. When the signal waveforms of the yarn unevenness detecting sensors 43 and 44 are sampled by the first A/D converter 45, the number of data acquired per unit length of the spun yarn 20 thus can be maintained substantially constant. A calculation load of the CPU 47 can be reduced when the sampling frequency is fixed.

As described above, the rotation sensor 42 outputs the rotation pulse signal every time the winding drum 24 rotates a prescribed angle. Therefore, the number of rotation pulse signals output per unit time is proportional to the rotation speed of the winding drum 24. The CPU 47 of the analyzer 52 acquires the rotational information of the winding drum 24 in accordance with the rotation pulse signal received from the rotation sensor 42. The rotational information of the winding drum 24 is information relating to the rotation speed of the winding drum 24, and may be a peripheral speed of the winding drum 24, an angular speed of the winding drum 24, the number of rotation pulse signals output per unit time, and the like. That is, the CPU 47 merely needs to acquire information relating to the rotation speed of the winding drum 24 in some form in accordance with the rotation pulse signal.

The CPU 47 obtains the sampling speed that becomes a reference of the travelling speed of the spun yarn 20 according to the processing such as multiplying a prescribed factor to the rotational information of the winding drum 24 obtained in the above manner. The CPU 47 obtains the sampling frequency fs1 according to the obtained sampling speed, and sets the obtained sampling frequency fs1 to the first A/D converter 45. The sampling frequency is set such that one sampling is performed every time the spun yarn 20 travels a prescribed unit length. The sampling frequency fs1 of the first A/D converter 45 may be changed as needed in proportion to the rotation speed of the winding drum 24. Since the CPU 47 calculates the sampling speed based on the rotational information of the winding drum 24, the CPU 47 can be referred to as functioning as the sampling speed acquiring section 72.

The analyzer 52 has a storage region configured as a ring buffer (a downstream ring buffer 55 and an upstream ring buffer 56) in the RAM 48 to temporarily carry the waveform data input from the first A/D converter 45. Specifically, data obtained by sampling the output signal (the first yarn thickness unevenness signal) from the first yarn unevenness detecting sensor 43 is accumulated in the downstream ring buffer 55. The data obtained by sampling the output signal (the second yarn thickness unevenness signal) from the second yarn unevenness detecting sensor 44 is accumulated in the upstream ring buffer 56. Although the size of the downstream ring buffer 55 and the upstream ring buffer 56 is not particularly limited, the downstream ring buffer 55 and the upstream ring buffer 56 can respectively carry 128 data in the present embodiment.

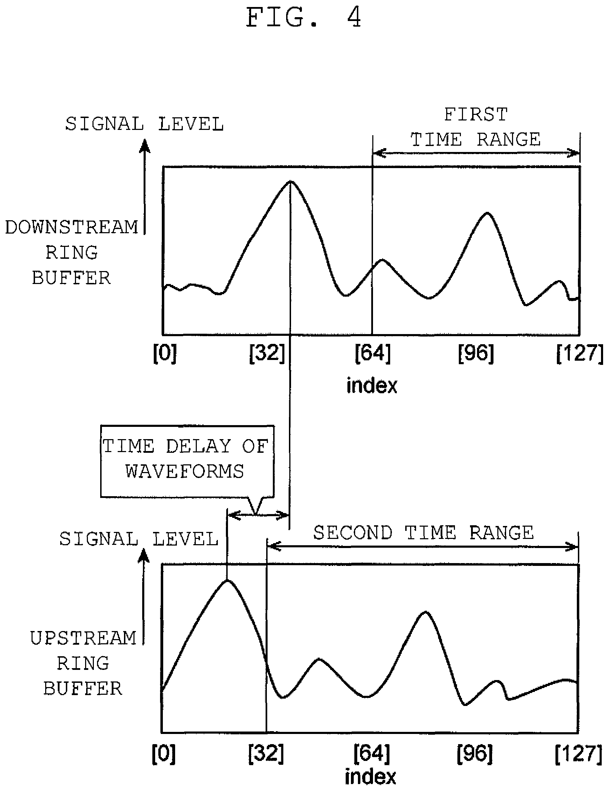

FIGS. 4 are graphs illustrating data series (waveform data series) accumulated in the ring buffers 55 and 56. In the graphs of FIG. 4, a vertical axis represents a signal level indicated by the waveform data, and a horizontal axis represents an index of the ring buffer in which the waveform data is stored. Regarding the index of the horizontal axis of FIG. 4, a smaller value is assigned to older data in the ring buffer. In other words, the index in which the oldest data is stored in the ring buffer is index [0], and the index in which the most recent data is stored is index [127]. Therefore, the horizontal axis of FIG. 4 may also be considered as a time axis.

If the tension applied to the spun yarn 20 is constant, stretching of the spun yarn 20 at the measurement positions of the first yarn unevenness detecting sensor 43 and the second yarn unevenness detecting sensor 44 is the same, and hence the same waveforms are assumed to be observed in the two yarn unevenness detecting sensors 43 and 44. Since the first yarn unevenness detecting sensor 43 is arranged downstream of the second yarn unevenness detecting sensor 44 in the yarn travelling direction, the waveform of the signal output from the first yarn unevenness detecting sensor 43 (the first yarn thickness unevenness signal) has a time delay with respect to the waveform of the signal output from the second yarn unevenness detecting sensor 44 (the second yarn thickness unevenness signal). This delay causes the waveform data series stored in the upstream ring buffer 56 to shift by $\Delta T$ in a past direction (left direction of FIG. 4) in the time axis compared to the waveform data series stored in the downstream ring buffer 55. Provided that the time delay is $\Delta T$, and a distance between the detection positions of the two yarn unevenness detecting sensors 43 and 44 is L, a yarn speed V can be obtained by $V = L/\Delta T \cdots (1)$. Therefore, the analyzer 52 can calculate the travelling speed of the spun yarn 20 by detecting the time delay $\Delta T$ of the waveform of the first yarn thickness unevenness signal with respect to the waveform of the second yarn thickness unevenness signal.

In the present embodiment, the CPU 47 compares the waveform of the first yarn thickness unevenness signal (waveform data series accumulated in the downstream ring buffer 55) and the waveform of the second yarn thickness unevenness signal (waveform data series accumulated in the upstream ring buffer 56) to obtain the time delay $\Delta T$. Since a certain duration of time is assumed when the "waveform" is referred, only the single waveform data sampled at a certain instant cannot be referred to as the "waveform". When referring to comparing the waveforms of the signals, the data series continuously acquired within a certain time range are compared as the specific processing.

The CPU 47 compares the waveform data series (the first waveform data series) continuously acquired within a prescribed first time range of the downstream waveform data accumulated in the downstream ring buffer 55 and the waveform data series (the second waveform data series) continuously acquired within a prescribed second time range of the waveform data accumulated in the upstream buffer 56.

As illustrated in FIG. 4, the first time range is a range from index [64] to index [127] of the ring buffer in the present embodiment. Therefore, the first waveform data series is configured by waveform data of most recent 64 points among the waveform data accumulated in the downstream ring buffer 55. The second time range is a range from index [32] to index [127] of the ring buffer. Therefore, the second waveform data series is configured by waveform data of most recent 96 points among the waveform data accumulated in the upstream ring buffer 56.

Next, the comparison of the waveforms carried out by the CPU 47 will be specifically described. The CPU 47 compares the first waveform data series and the second waveform data series to obtain a similarity degree of the waveform of the first yarn thickness unevenness signal and the waveform of the second yarn thickness unevenness signal. The similarity degree is an indication indicating to what extent the two waveforms overlap (to what extent the two waveforms are similar).

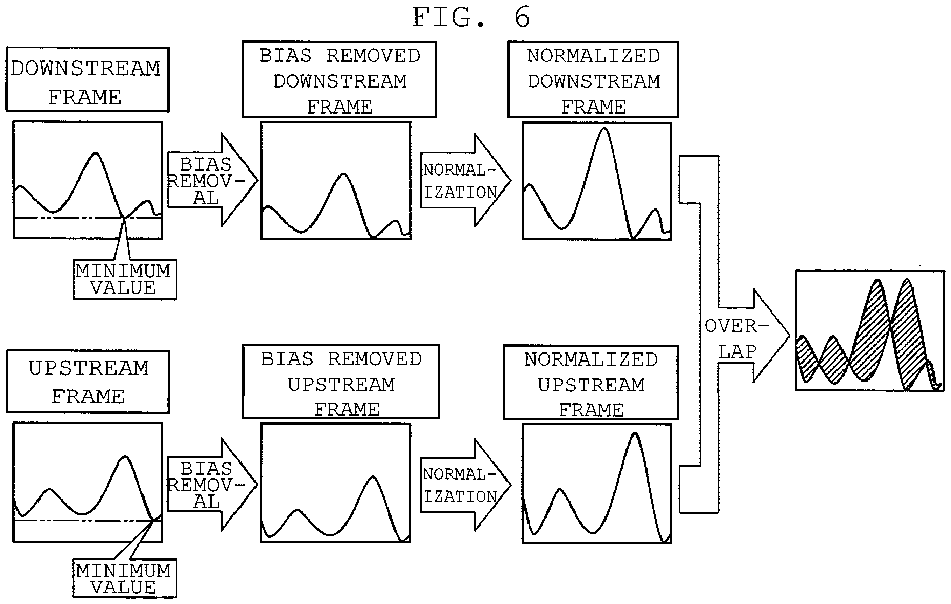

Various methods can be considered as a method for calculating the similarity degree. In the present embodiment, the similarity degree is calculated in the following manner. That is, the two waveforms to be compared are overlapped to acquire an area between the two waveform graphs (portion hatched with diagonal lines in FIG. 6). In this case, the two waveforms do not overlap at all if the two waveforms are completely different, and the area becomes 2. If the two waveforms completely coincide, the area becomes 0. With the above area, the similarity degree can be calculated by the following equation (2).

```
Similarity degree = 1 - (area between two waveforms) ÷ 2 ··· (2)
```

According to the definition of the similarity degree, the two waveforms are more different as the similarity degree is closer to 0, and the two waveforms are more similar as the similarity degree is closer to 1.

Since the second waveform data series is configured by waveform data of 96 points and the first waveform data series is configured by waveform data of 64 points, the range of the second waveform data series is set wider than the range of the first waveform data series. In other words, the second time range is set longer than the first time range in the present embodiment. In order to calculate the similarity degree, the length on the time axis of the two waveforms (length of the waveform data series) to be compared is required to be equal. Thus, when comparing the first waveform data series and the second waveform data series, the CPU 47 extracts the waveform data series having the same length as the first wavelength data series from the second waveform data series, and obtains the similarity degree of the extracted waveform data series and the first waveform data series.

This will be more specifically described below. The CPU 47 prepares an imaginary frame (the downstream frame and the upstream frame) for imaginarily retrieving the waveform data series acquired within a prescribed time range from the waveform data of the ring buffers 55 and 56. The CPU 47 evaluates the overlapping (the similarity degree) of the waveform data of the downstream frame (the first imaginary frame) and the waveform data of the upstream frame (the second imaginary frame).

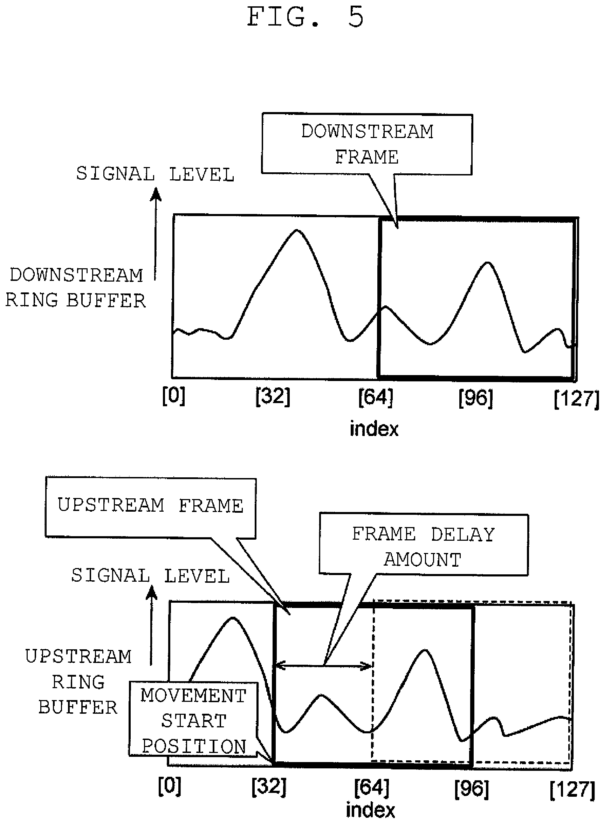

The downstream frame (the first imaginary frame) is an imaginary frame for imaginarily retrieving the waveform data series (the first waveform data series) continuously acquired in the first time range from the waveform data accumulated in the downstream ring buffer 55. Specifically, as illustrated in FIG. 5, the downstream frame is set to include data of most recent 64 points (the waveform data in a range from index [64] to index [127] of downstream ring buffer) among the waveform data stored in the downstream ring buffer 55. In the following description, the index of the oldest data of the waveform data included in the imaginary frame is expressed as a head position of the imaginary frame. In the case of the downstream frame, the head position is index [64].

The upstream frame (the second imaginary frame) is an imaginary frame for imaginarily retrieving the waveform data series (waveform data of 64 points) in the time range of the same length as the first time range from the waveform data series (the second waveform data series) of the upstream ring buffer 56 acquired in the second time range. The upstream frame is set to store data of 64 continuous points among the waveform data of the range from index [32] to index [127] (the second time range) of the upstream ring buffer 56.

The range of the second waveform data series is wider than the first waveform data series by the waveform data of 32 points towards the past direction on the time axis. The head position of the upstream frame thus can be set to a position shifted within 32 points in the past direction than the head position of the downstream frame. The difference in index between the head position of the downstream frame and the head position of the upstream frame is referred to as "frame delay amount" or simply "delay amount".

After the upstream frame is set as described above, the CPU 47 extracts the waveform data in accordance with the predetermined extracting condition from the waveform data of 64 points in the set upstream frame, and creates a new upstream frame in accordance with the extracted waveform data. This reduces the number of waveform data included in the upstream frame. The predetermined extracting condition includes extracting every other waveform data included in the upstream frame, extracting every two waveform data, and the like, for example. Similarly, the CPU 47 extracts the waveform data in accordance with the predetermined extracting condition from the waveform data of 64 points in the set downstream frame, and creates a new downstream frame in accordance with the extracted waveform data. For example, the extracting condition is changed when the yarn travelling speed (the sampling speed) exceeds a prescribed yarn travelling speed (the prescribed sampling speed). Since the processing time relating to the acquisition of the yarn travelling information is substantially constant, when the sampling speed becomes fast, the number of points to be sampled during a period of time in which the yarn travelling information is being acquired increases. In this case, the ratio at which the yarn travelling information is acquired with respect to the number of points to be sampled lowers. Therefore, the extracting condition is set as follows. If the prescribed sampling speed is smaller than a first threshold value, reduction is not performed. If the prescribed sampling speed is greater than or equal to the first threshold value, reduction is performed for every other waveform data. If the prescribed sampling speed is greater than or equal to a second threshold value, reduction is performed for every two waveform data.

After the upstream frame and the downstream frame in which the number of waveform data is reduced are set, the CPU 47 obtains the similarity degree, which is the indication on what extent the waveform included in the upstream frame and the waveform included in the downstream frame are overlapping. The output signals of the yarn unevenness detecting sensors 43 and 44 contain bias components. Therefore, the two waveforms may not overlap satisfactorily due to variation in the sensitivity of the yarn unevenness detecting sensors 43 and 44. The CPU 47 thus performs a processing of bias component removal and normalization on the waveform data of the upstream frame and the downstream frame. As illustrated in FIG. 6, the bias component removal is a processing of searching for a minimum value of the data in the calculation frame and subtracting the minimum value from the value of each data. Normalization is a processing of dividing the value of each data with a total value of data in the calculation frame. The area of the graph of the waveform in the calculation frame is thereby normalized to 1. Since the bias component removal and the normalization of the waveforms are carried out on the upstream waveform data and the downstream waveform data respectively, variation in bias component for each of the yarn unevenness detecting sensors 43 and 44, as well as the difference in sensitivity for each of the yarn unevenness detecting sensors 43 and 44 can be absorbed.

After the processing of bias component removal and normalization are performed as described above, the CPU 47 executes a similarity degree evaluation processing for obtaining the similarity degree between the data series of the downstream frame (the waveform of the first yarn thickness unevenness signal) and the data series of the upstream frame (the waveform of the second yarn thickness unevenness signal). Since the CPU 47 evaluates the similarity degree of the two waveforms, the CPU 47 may be referred to be functioning as the similarity degree evaluating section 65.

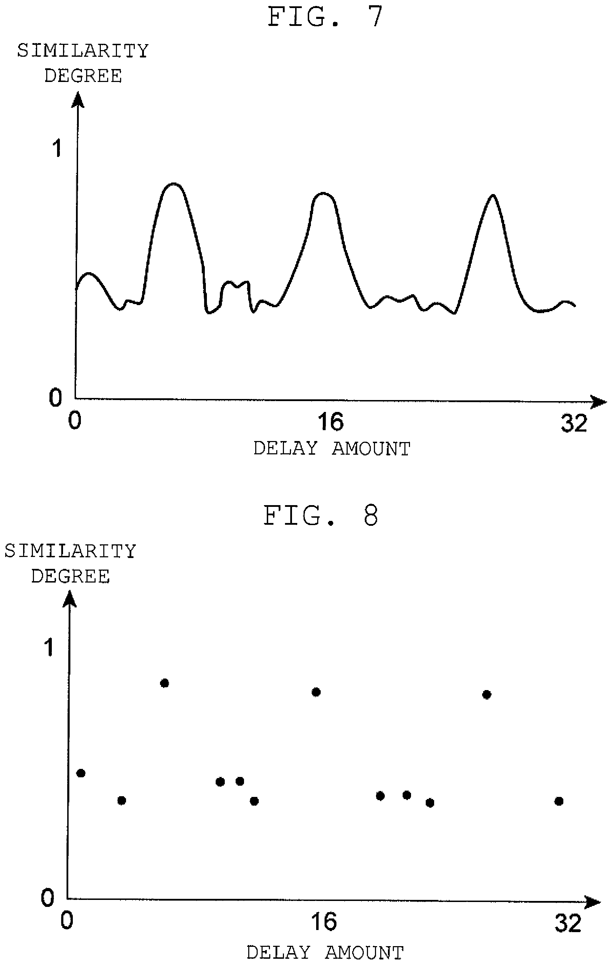

The head position (the reference position) of the upstream frame thus can be set to a position shifted within 32 points in the past direction than the head position of the downstream frame. The frame delay amount (the prescribed delay amount) can be changed in the range from 0 to 32. The similarity degree evaluating section 65 repeatedly executes the similarity degree evaluation processing while changing the frame delay amount within the above range. The similarity degree evaluating section 65 selects a plurality of positions (the reference positions) on the time axis of the upstream frame in the second time range, and evaluates the similarity degree with respect to each of the plurality of positions. The similarity degree evaluating section 65 thereby acquires a plurality of similarity degrees. By setting the second time range to be longer than the first time range, the similarity degree evaluation can be carried out for a plurality of times while moving the upstream frame within the second time range. The CPU 47 can therefore acquire a plurality of similarity degrees. As a result of acquiring a plurality of similarity degrees for the frame delay amount, the CPU 47 can obtain a relationship between the delay amount and the similarity degree, as illustrated in FIG. 7, for example. The CPU 47 extracts only the maximum points (similarity degree maximum points) at which the similarly degree becomes maximum from the obtained relationship between the frame delay amount and the similarity degree, and obtains a relationship between the frame delay amount and the similarity degree at each extracted maximum point as illustrated in FIG. 8. The processing of extracting only the maximum points is performed to suppress error from occurring when weighting is performed on the similarity degree. The details of weighting will be described in detail later. The maximum point is a point which only the maximum portion of the similarity degree is extracted and represents the similarity degree.

The effects of obtaining the similarity degree by reducing the waveform data in the upstream frame and the downstream frame will be described. The resolution of the travelling speed of the spun yarn 20 to be calculated becomes higher by sampling the output signals from the yarn unevenness detecting sensors 43 and 44 according to the sampling frequency obtained based on the rotational information of the winding drum 24. For example, if the distance between the yarn unevenness detecting sensors 43 and 44 is 10 mm and the sampling is performed every time the spun yarn 20 moves 1 mm (constant length of the spun yarn 20) based on the sampling speed, the resolution becomes 1/10 times the sampling speed like 5/10, 6/10, 7/10, 8/10, ... At this time, if the range to obtain the similarity degree is 20 mm (worth 20 indices), the evaluation processing of the similarity degree is carried out with respect to the waveform data of 20 points. If the sampling is performed every time the spun yarn 20 moves 0.5 mm, the resolution becomes 1/20 times the sampling speed, but the evaluation processing of the similarity degree needs to be performed with respect to the waveform data of 40 points. The resolution and the processing time are in a trade-off relationship. The processing time for the similarity degree evaluation can be shortened by reducing the waveform data in the upstream frame and the downstream frame while improving the resolution of the travelling speed of the spun yarn 20 by shortening the sampling interval as in the present embodiment.

When the similarity degree becomes maximum, the waveform of the upstream frame and the waveform of the downstream frame are most satisfactorily overlapped. In other words, the time delay ΔT has been resolved between the waveform data series of the upstream ring buffer 56 and the waveform data series of the downstream ring buffer 55. Therefore, frame delay amount when the similarity degree is maximum is assumed to correspond to the time delay ΔT of the waveform of the upstream ring buffer 56 and the waveform of the downstream ring buffer 55. In other words, the time delay ΔT of the waveforms can be calculated based on the frame delay amount when the similarity degree becomes maximum. The calculation of the delay ΔT will be specifically described later.

The clearer 15 can calculate the travelling speed of the spun yarn 20 by substituting ΔT obtained as described above in the equation (1) . In this manner, the clearer 15 can obtain the travelling speed of the spun yarn 20 based on the similarity degree of two waveforms. However, the clearer 15 of the present embodiment does not calculate the travelling speed of the spun yarn 20 using the similarity degree as it is as described above, and instead calculates the travelling speed of the spun yarn 20 using the weighted similarity degree, as hereinafter described.

In the present embodiment, a plurality of similarity degrees are obtained by moving the upstream frame on the time axis as described above, but instead, the downstream frame may be moved on the time axis. However, if the upstream frame is moved on the time axis as in the present embodiment, the position of the downstream frame on the time axis can be fixed so as to include the most recent waveform data among the waveform data included in the downstream ring buffer 55 (in FIG. 5, the downstream frame can be fixed at a rightmost position) . The clearer 15 thus can calculate the time delay ΔT using the most recent downstream yarn thickness unevenness signal, and can obtain the travelling speed of the spun yarn 20 in real time.

Since a similar state may continue in the thickness unevenness of the travelling spun yarn 20, a similar waveform may also continue in the signals output from the yarn unevenness detecting sensors 43 and 44. In this case, since the upstream waveform and the downstream waveform overlap at a plurality of positions, as illustrated in FIG. 7, a plurality of frame delay amounts indicating a peak (maximum point) having a large similarity degree exist within the movement range of the upstream frame. If a plurality of peaks having a large similarity degree exist within the movement range of the upstream frame, the delay amount of which peak is to be used for the calculation of the time delay $\Delta T$ becomes confusing and the yarn travelling speed may be calculated using a wrong frame delay amount.

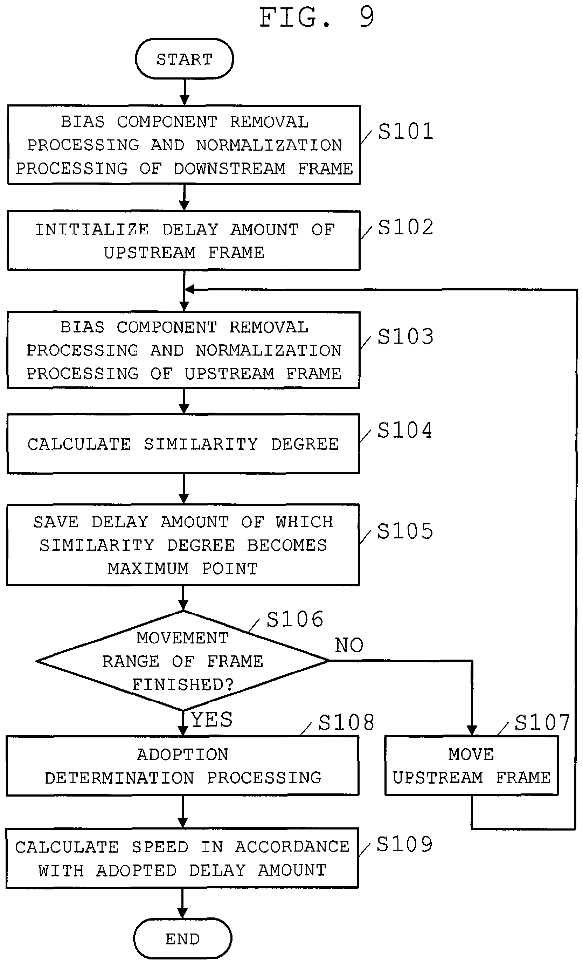

Therefore, in the present embodiment, weighting is performed on the similarity degree to resolve the confusion of the peak of the similarity degree. The yarn travelling speed acquiring processing executed by the CPU 47 in the present embodiment will be described below with reference to FIG. 9.

The CPU 47 executes the yarn travelling speed acquiring processing illustrated in the flowchart of FIG. 9 every time new data is sampled in the first A/D converter 45 and new waveform data is added to the ring buffers 55 and 56. After starting the yarn travelling speed acquiring processing, the CPU 47 reduces the waveform in the downstream frame, and performs bias component removal and normalization (step S101).

The CPU 47 then performs initialization of the frame delay amount (initialization of the position of the upstream frame) (step S102). In the present embodiment, the frame delay amount is initialized to 32. The upstream frame is thus set to a position shifted to the past corresponding to the waveform data of 32 points from the downstream frame. Therefore, the upstream frame includes the waveform data in the range from index [32] to index [95] of the upstream ring buffer 56 (see FIG. 5).

After the position of the upstream frame is determined, the CPU 47 reduces the waveform in the upstream frame, and performs bias component removal and normalization of the waveform (step S103) .

Next, the CPU 47 performs the similarity degree evaluation processing for obtaining the similarity degree on the waveform data in the upstream frame and the waveform data in the downstream frame (step S104). After calculating the similarity degree, the CPU 47 saves the frame delay amount of each maximum point of the similarity degree (see FIG. 8) (step S105).

The CPU 47 then determines whether or not the movement range of the upstream frame is finished (step S106). In the present embodiment, the upstream frame is moved in the range in which the frame delay amount is from 32 to 0 (i.e., range in which the upstream frame fits within the second time range). If the movement range is not finished (step S106: NO), the frame delay amount is reduced by one in step S107 (upstream frame is shifted by one toward right in FIG. 5), and the process returns to step S103. If the movement range is finished (step S106: YES), the process proceeds to step S108.

According to the above loop processing, steps S103 to S107 are repeatedly carried out while shifting the position of the upstream frame on the time axis. Accordingly, since the similarity degree evaluation processing and the weighting processing are performed for a plurality of times in the movement range of the upstream frame (range in which the frame delay amount is from 0 to 32), the CPU 47 can acquire a plurality of similarity degrees. The data stored in step S105 is reset every time a new yarn travelling speed acquiring processing is started.

The CPU 47 then performs an adoption determination processing (step S108) for determining a maximum point to be adopted in the calculation of the time delay $\Delta T$ of the waveform data of the upstream ring buffer 56 and the waveform data of the downstream ring buffer 55 for a plurality of obtained maximum points.

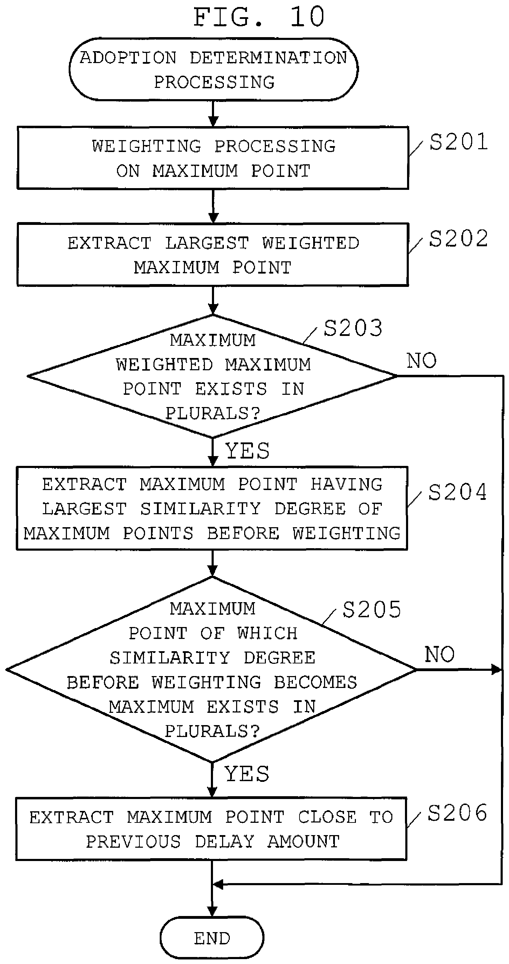

The contents of the adoption determination processing will be specifically described below with reference to the flowchart of FIG. 10. After starting the adoption determination processing, the CPU 47 performs the weighting processing on each maximum point illustrated in FIG. 8, and performs the weighting processing for calculating the weighted maximum point (step S201). Since the weighting processing is carried out in this manner, the CPU 47 may be referred to be functioning as the weighting processing section 66. In the following description, the maximum point before the weighting is sometimes referred to as "raw maximum point", in particular if there is a need to be distinguished from the weighted maximum point. The above weighting processing is performed by multiplying a weighting factor to the value of the raw maximum point. In other words, provided that the raw maximum point for the frame delay amount c_index is $S_{c\_index}$ and the weighting factor with respect to the frame delay amount c_index is $W_{c-index}$, the weighted maximum point $S'_{c\_index}$ can be obtained with the following equation (3).

$$S'_{c\_index} = S_{c\_index} \times W_{c\_index} \qquad \cdots \quad (3)$$

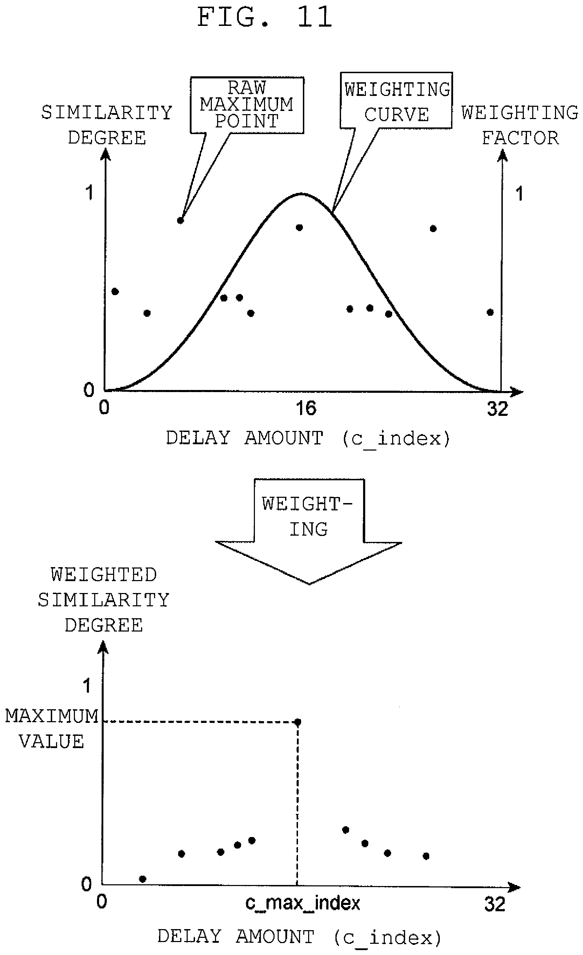

The value of the weighting factor $W_{c\_index}$ for a certain frame delay amount c_index is determined by a weighting curve that specifies the relationship between the frame delay amount and the weighting factor. An example of the weighting curve is illustrated in an upper graph of FIG. 11. As illustrated in FIG. 11, the weighting curve is set so that the weighting factor has one maximum value that becomes a peak at the position of a prescribed frame delay amount c_index, and the value of the weighting factor is set so as to gradually decrease as it becomes distant from the peak.

Therefore, by performing the weighting on the maximum point using the weighting factor specified with the weighting curve, the maximum point located near the peak of the weighting curve is emphasized and the other maximum points are suppressed. As a result, as illustrated in the lower graph of FIG. 11, the emphasis (similarity degree) of the unnecessary maximum points among the plurality of maximum points can be suppressed.

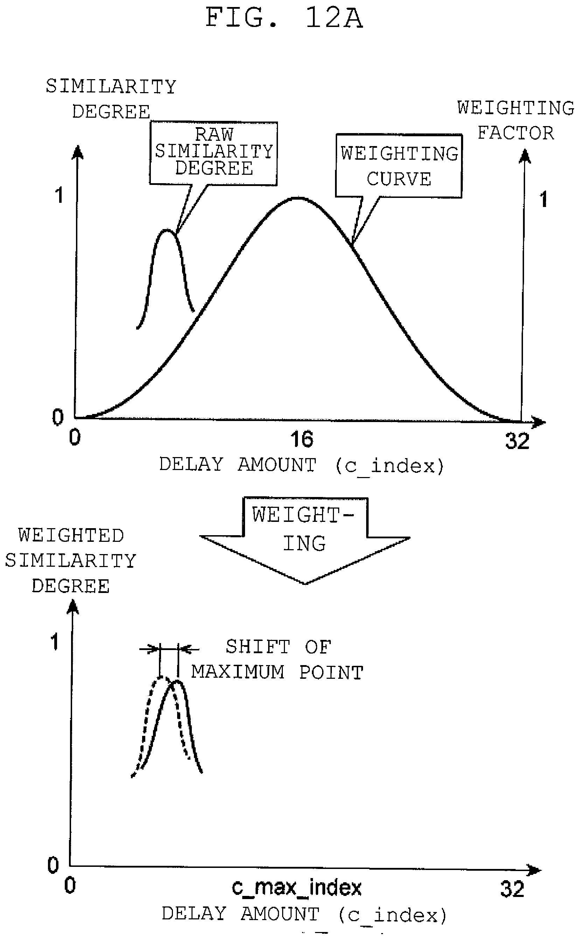

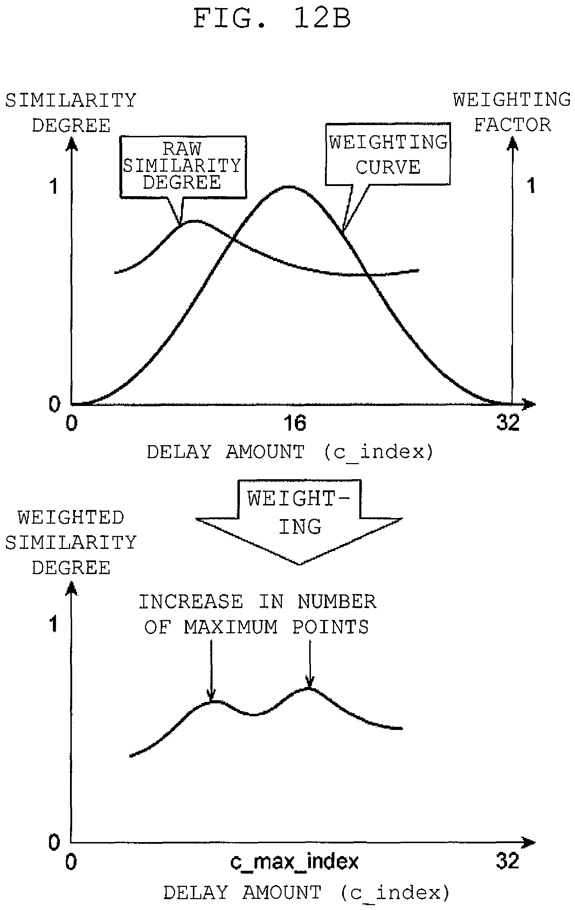

The effects of performing the weighting processing on the maximum point will be described. For example, when performing weighting using the weighting curve with respect to the raw similarity degree of which the weighting has not been performed as illustrated in the upper graph of FIG. 12A, the maximum point of the weighted similarity degree, which is the similarity degree after the weighting, may shift from the position (frame delay amount) of the maximum point of the raw similarity degree, as illustrated in the lower graph of FIG. 12A. For example, when performing weighting using the weighting curve with respect to the raw similarity degree of which the weighting has not been performed as illustrated in the upper graph of FIG. 12B, the number of maximum points of the weighted similarity degree may increase, as illustrated in the lower graph of FIG. 12B.

As illustrated in FIG. 11, by performing weighting with respect to the maximum points in the present embodiment, occurrence of shift in the position of the maximum point and/or increase in the number of maximum points can be suppressed. Therefore, the weighting processing can be more accurately performed in the present embodiment.

In the present embodiment, a history weighting curve and a sampling speed weighting curve are used as the weighting curve. In step S201, the CPU 47 performs the processing of weighting the maximum point using the history weighting curve and the processing of weighting the maximum point using the sampling speed weighting curve.

The history weighting curve is set so that the weighting factor becomes large in proximity to the frame delay amount where the weighted maximum point became maximum in the previous yarn travelling speed acquiring processing. That is, since the yarn travelling speed continuously changes, the yarn travelling speed acquired in the current yarn travelling speed acquiring processing is assumed to be not significantly different from the yarn travelling speed acquired in the previous yarn travelling speed acquiring processing. Therefore, the frame delay amount where the maximum point becomes maximum in the current yarn travelling speed acquiring processing has a high probability of being in proximity to the frame delay amount where the maximum point became maximum in the previous yarn travelling speed acquiring processing. In other words, the raw maximum point that appears at a position away from the frame delay amount where the maximum point became maximum in the previous yarn travelling speed acquiring processing has a high possibility of being a false maximum point that does not correspond to the yarn travelling speed. Thus, the weighting factor is preferably reduced to a lower degree of importance with respect to the raw maximum point located at a position away from the frame delay amount where the maximum point became maximum in the previous yarn travelling speed acquiring processing. The history weighting curve will be described in detail later.

The sampling speed weighting curve is set such that the weighting factor becomes large in proximity to the frame delay amount corresponding to the sampling speed calculated in accordance with the rotational information of the winding drum 24. In other words, the yarn travelling speed changes around the sampling speed, and is assumed to not significantly differ from the sampling speed. Therefore, the time delay $\Delta T$ of the waveform data of the upstream ring buffer 56 with respect to the waveform data of the downstream ring buffer 55 is assumed to change in proximity to a frame delay corresponding to the sampling speed. In other words, the raw maximum point that appears at a position located away from the frame delay amount corresponding to the sampling speed has a high possibility of being a false maximum point that does not correspond to the yarn travelling speed. Thus, the weighting factor is preferably reduced to lower degree of importance with respect to the raw maximum point located at a position away from the frame delay amount corresponding to the sampling speed. The sampling speed weighting curve will be described in detail later.

Referring back to FIG. 10, the CPU 47 calculates a plurality of weighted maximum points using the history weighting curve and the sampling speed weighting curve, and then extracts the weighted maximum point having the largest similarity degree (similarity degree after weighting) (step S202). The CPU 47 determines whether or not a plurality of weighted maximum points having the largest similarity degree are extracted (step S203). If only one weighted maximum point having the largest similarity degree is extracted (step S203: NO), the CPU 47 adopts the maximum point extracted in step S202 as the maximum point (target weighted similarity degree) for calculating the time delay $\Delta T$ of the waveform data.

If a plurality of weighted maximum points having the largest similarity degree are extracted (step S203: YES), the CPU 47 compares the similarity degrees before weighting for the extracted weighted maximum points. The CPU 47 extracts the weighted maximum point having the largest similarity degree before weighting as a result of the comparison (step S204). The CPU 47 determines whether or not a plurality of maximum points having the largest similarity degree before weighting are extracted (step S205). If only one weighted maximum point having the largest similarity degree before weighting is extracted (step S205: NO), the CPU 47 adopts the maximum point extracted in step S204 as the maximum point (target weighted similarity degree) for calculating the time delay $\Delta T$ of the waveform data.

If a plurality of weighted maximum points having the largest similarity degree before weighting are extracted (step S205: YES), the CPU 47 first extracts the maximum point having a frame delay amount closest to the frame delay amount where the maximum point became maximum in the previous yarn travelling speed acquiring processing among the extracted weighted maximum points. The CPU 47 adopts the extracted weighted maximum point as the maximum point (target weighted similarity degree) for calculating the time delay $\Delta T$ of the waveform data (step S206). Since the CPU 47 extracts the maximum point for calculating the delay $\Delta T$ from the plurality of weighted maximum points, the CPU 47 may be referred to be functioning as the travelling information acquiring section 67 adapted to extract the maximum point for calculating the delay $\Delta T$.

Next, the processing carried out after the adoption determination processing is terminated will be described. After the execution of the adoption determination processing is terminated, the CPU 47 returns to the flow of FIG. 9 and proceeds to processing of step S109.

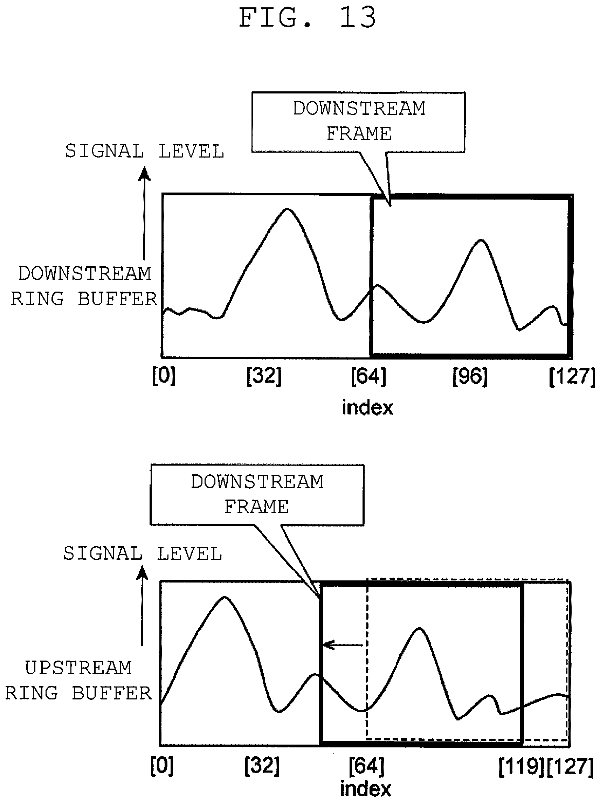

In step S109, the CPU 47 calculates the travelling speed of the spun yarn 20 based on the frame delay amount of the maximum point adopted in the adoption determination processing of step S108. In the following description, the frame delay amount of the maximum point adopted in step S108 is referred to as "currently adopted maximum value correspondence delay amount". The currently adopted maximum value correspondence delay amount is assumed to correspond to the time delay $\Delta T$ between the waveform data of the upstream ring buffer 56 and the waveform data of the downstream ring buffer 55. The currently adopted maximum value correspondence delay amount is the frame delay amount where the waveform of the upstream ring buffer 56 and the waveform of the downstream ring buffer 55 match when the downstream frame illustrated in FIG. 13 is moved in the past direction from the most recent position on the time axis of the upstream frame. FIG. 13 illustrates an example in which the waveform data of the upstream ring buffer 56 and the waveform data of the downstream ring buffer 55 match when the downstream frame is shifted by eight indices from index [127] to index [119] (i.e., a case in which the frame delay amount is eight).

Therefore, in the example of FIG. 13, the time duration from index [127] to index [119] corresponds to the time delay $\Delta T$ of the waveform data of the upstream ring buffer 56 and the waveform data of the downstream ring buffer 55.

The CPU 47 measures the sampling time interval when sampling the yarn thickness unevenness signal for every sampling interval. Since the CPU 47 measures the sampling time interval, the CPU 47 functions as the measuring section 73. The CPU 47 integrates each sampling time interval from index [127] to index [119] . In other words, the CPU 47 integrates the sampling time interval from index [127] to index [126], the sampling time interval from index [126] to index [125], ... and the sampling time interval from index [120] to index [119] . The integration result becomes the time delay $\Delta T$ of the waveforms.

The effects of calculating the time delay $\Delta T$ of the waveforms by integrating the sampling time interval will be described. For example, the sampling time interval becomes constant if the travelling speed of the spun yarn 20 is constant, and hence the time delay $\Delta T$ of the waveforms is obtained by multiplying the sampling time interval and the frame delay amount (number of indices) . If the average travelling speed of the spun yarn 20 is in acceleration, the sampling time interval gradually becomes shorter, and hence the time delay $\Delta T$ of the waveforms becomes longer than a value obtained by multiplying the most recent sampling time interval and the frame delay amount (number of indices). If the average travelling speed of the spun yarn 20 is in deceleration, the time delay $\Delta T$ of the waveforms becomes shorter. By integrating the sampling time intervals to calculate the time delay $\Delta T$ of the waveforms as in the present embodiment, the delay $\Delta T$ can be accurately calculated even if the spun yarn 20 is in acceleration or in deceleration.

The CPU 47 calculates the travelling speed of the spun yarn 20 by substituting $\Delta T$ obtained as described above to the equation (1) (step S109) . By calculating the travelling speed of the spun yarn 20 in accordance with the weighted maximum point, the CPU 47 can accurately calculate the travelling speed of the spun yarn 20 even if a plurality of raw maximum points exists. In the present embodiment, as described above, the adoption determination processing is performed for preventing a maximum point having low reliability from being adopted. The CPU 47 thus can obtain highly reliable travelling speed.

The CPU 47 changes the sampling period (cycle) of the second A/D converter 46 in accordance with the yarn travelling speed obtained as described above. Specifically, the CPU 47 generates the fixed yarn length pulse signal at a frequency proportional to the yarn travelling speed, and transmits the generated fixed yarn length pulse signal to the second A/D converter 46. The yarn travelling speed is an accurate yarn travelling speed obtained in accordance with the weighted maximum point. Therefore, by sampling the yarn thickness unevenness signals by the second A/D converter 46 in accordance with the fixed yarn length pulse signal based on the yarn travelling speed, the number of data per unit length of the spun yarn 20 can be accurately made constant.

The yarn travelling speed obtained as described above is transmitted to the unit control section 50. The unit control section 50 transmits the control signal to the motor control section 54 according to the travelling speed of the spun yarn 20 transmitted from the clearer 15, and controls the rotation of the winding drum 24. The winder unit 10 thus can perform the winding of the package 30 according to the accurate travelling speed of the spun yarn 20. The unit control section 50 can calculate a total length of the spun yarn 20 wound into the package 30 by integrating the travelling speed of the spun yarn 20 by time. Therefore, for example, when the winding of the spun yarn 20 of a prescribed length is finished, the winder unit 10 can terminate the winding of the spun yarn 20 and have a fully-wound package. Since the winder unit 10 thus can make the length of the spun yarn 20 to be wound to the respective package 30 to be uniform, packages 30 wound with spun yarn 20 of uniform length can be produced.

In the above description, although the CPU 47 has been described to calculate the travelling speed of the spun yarn 20, the yarn travelling information is not necessarily acquired in the form of speed. For example, if the spun yarn 20 moved 2 cm in one second and 3 cm in the next second, the CPU 47 merely needs to acquire the information "moved total of 5 cm in two seconds", and may not necessarily need to acquire information in the form of speed such as "2.5 cm per second". The information of "length the spun yarn 20 moved per unit time" is also information relating to the travelling state of the spun yarn 20, and hence is one type of yarn travelling information.

Next, the method for determining the weighting curve will be described. In the present embodiment, the weighting curve includes a history weighting curve and a reference speed weighting curve.

First, the history weighting curve will be described. The history weighting curve is set so that the weighting factor becomes large in proximity to the frame delay amount where the weighted maximum point became maximum in the previous yarn travelling speed acquiring processing. In other words, the maximum point of the history weighting curve is set in accordance with the previously calculated frame delay amount. The history weighting curve becomes a weighting curve corresponding to the speed ratio based on the frame delay amount (prescribed delay amount) of the first yarn thickness unevenness signal and the second yarn thickness unevenness signal.

The weighting curve corresponding to the speed ratio will be hereinafter described using specific examples. Suppose that the first A/D converter 45 samples the yarn thickness unevenness signal every time the spun yarn 20 travels 1 mm. In this case, if the travelling speed of the spun yarn 20 calculated in accordance with the rotational information of the winding drum 24 is 1000 mm/sec., the sampling time interval is 1 msec. In this case, if the distance between the first yarn unevenness detecting sensor 43 and the second yarn unevenness detecting sensor 44 is 10 mm and the actual travelling speed of the spun yarn 20 is 1000 mm/sec., the value of the frame delay amount of the maximum point adopted in step S108 of FIG. 9 becomes ten. However, if there is error in the sampling frequency and the like, and the calculated frame delay amount is nine, the actual travelling speed of the spun yarn 20 becomes $1000 \times (10/9)$ mm/sec. Similarly, if the calculated frame delay amount is 11, the actual travelling speed of the spun yarn 20 is $1000 \times (10/11)$ mm/sec. Thus, the speed ratio differs even if the frame delay amount is one. Therefore, the weight corresponding to the speed ratio based on the frame delay amount needs to be determined, instead of determining the weight based on the frame delay amount.

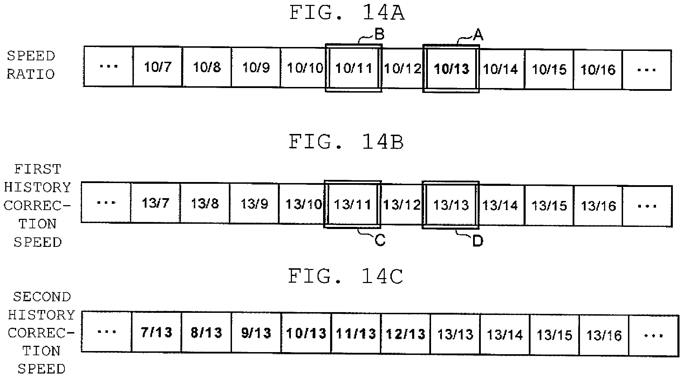

As illustrated in FIG. 14A, the CPU 47 obtains the speed ratio in accordance with the frame delay amount to be the reference (a reference delay amount) and the calculated frame delay amount (a calculated delay amount) . In FIG. 14A, the numerator represents the reference delay amount, and the denominator represents the calculated delay amount. The reference delay amount is the frame delay amount corresponding to the sampling speed, and is ten herein. This speed ratio is obtained by having the reference delay amount of ten as the numerator and changing the calculated delay amount of the denominator one by one. As illustrated in FIG. 14B, the CPU 47 then obtains a first history correction speed ratio that takes into consideration the frame delay amount previously calculated with respect to the obtained speed ratio. For example, if the previously calculated frame delay amount is 13, the first history correction speed ratio is calculated using the speed ratio (10/13) in a frame A illustrated in FIG. 14A. Specifically, when obtaining the first history correction speed ratio in a frame C illustrated in FIG. 14B, the CPU 47 calculates the first history correction speed ratio (13/11) in the frame C by dividing the speed ratio (10/11) of a frame B by the speed ratio (10/13) of the frame A. Similarly, the first history correction speed ratio in a frame D can be obtained by dividing the speed ratio of the frame A by the speed ratio of the frame A.

As illustrated in FIG. 14C, the CPU 47 then obtains a second history correction speed ratio. The second history correction speed ratio is obtained, such that the first history correction speed ratio (the speed ratio 13/13 of the frame D) corresponding to the previously calculated frame delay amount takes a largest value, by correcting the first history correction speed ratio exceeding such value. Specifically, the second history correction speed ratio is calculated by interchanging the denominator and the numerator of each value of "13/7", "13/8", ..., "13/12" in which the first history correction speed ratio exceeds 13/13. The first history correction speed ratio that does not exceed 13/13 is used as it is as the second history correction speed ratio.

The CPU 47 obtains the history weighting curve using the second history correction speed ratio. Specifically, the history weighting curve is defined with the following equation (4) designating the relationship of a history weighting factor $W_P$ that forms the history weighting curve and a second history correction speed ratio N.

$$W_P = \exp(-(1-N)^2/W) \qquad \cdots (4)$$

W is a constant that can be set by the user.

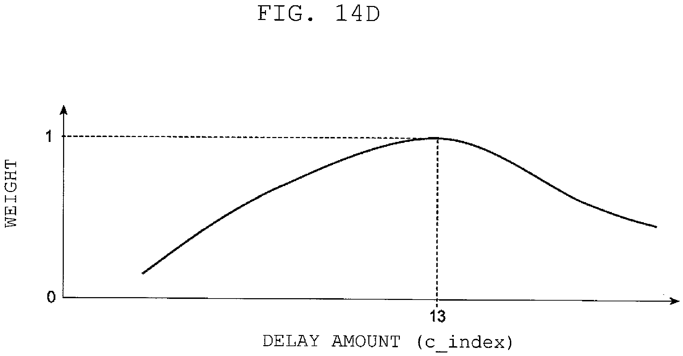

FIG. 14D illustrates an example of the history weighting curve calculated using the equation (4) . The history weighting curve having the previous frame delay amount of 13 as maximum is illustrated.

The above-described example illustrates an example of calculating the history weighting curve when the previously calculated delay amount is 13, but the history weighting curve when the previously calculated delay amount takes other values is also calculated in advance. When weighting the maximum point using the history weighting curve, the CPU 47 can select and use the history weighting curve corresponding to the previous calculated delay amount.

Next, the sampling speed weighting curve will be described. The sampling speed weighting curve is set such that the weighting factor becomes large in proximity to the frame delay amount corresponding to the sampling speed calculated in accordance with the rotational information of the winding drum 24, as described above. The maximum point of the sampling speed weighting curve is set in accordance with the frame delay amount when the spun yarn 20 travelled under the sampling speed. Similar to the history weighting curve, regarding the sampling speed weighting curve, the weight is not determined based on the frame delay amount but rather the weight corresponding to the speed ratio based on the frame delay amount needs to be determined. Therefore, the sampling speed weighting curve becomes a weighting curve corresponding to the speed ratio based on the frame delay amount (prescribed delay amount) of the first yarn thickness unevenness signal and the second yarn thickness unevenness signal.

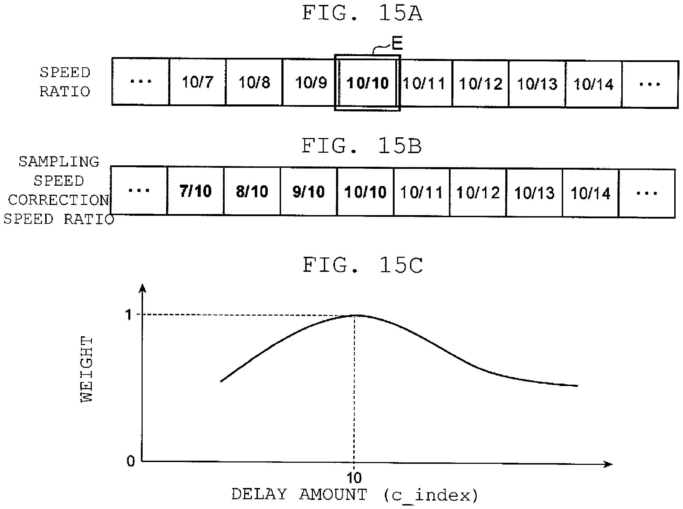

As illustrated in FIG. 15A, the CPU 47 obtains the speed ratio in accordance with the frame delay amount to become the reference (the reference delay amount) and the calculated frame delay amount (the calculated delay amount) . In FIG. 15A, the numerator represents the reference delay amount, and the denominator represents the calculated delay amount. The reference delay amount is the frame delay amount corresponding to the sampling speed, and is ten herein. This speed ratio is obtained by having the reference delay amount of ten as the numerator and changing the calculated delay amount of the denominator one by one.

The CPU 47 then obtains the sampling speed correction speed ratio, as illustrated in FIG. 15B. The sampling speed correction speed ratio is obtained, such that the speed ratio (a speed ratio 10/10 of a frame E) corresponding to the frame delay amount when the spun yarn 20 travelled under the sampling speed takes a largest value, by correcting the speed ratio exceeding such value. Specifically, the sampling speed correction speed ratio is calculated by interchanging the denominator and the numerator of each value of "10/7", "10/8", "10/9" in which the speed ratio exceeds 10/10. The correction speed ratio not exceeding 10/10 is used as it is as the sampling speed correction speed ratio.

The CPU 47 uses the sampling speed correction speed ratio to obtain the sampling speed weighting curve. Specifically, the sampling speed weighting curve is defined with the following equation (5) designating a relationship of a sampling speed weighting factor $W_A$ that forms the sampling speed weighting curve and a sampling speed correction speed ratio N.

$$W_A = \exp(-(1-N)^2/W) \qquad \cdots \quad (5)$$

W is a constant that can be set by the user.

FIG. 15C illustrates an example of a sampling speed weighting curve calculated using the equation (5). An example illustrated in FIG. 15C is a sampling speed weighting curve in which the frame delay amount (10) when the spun yarn 20 travelled under the sampling speed is maximum.

The above-described example illustrates an example of calculating the sampling speed weighting curve when the spun yarn 20 travelled under the sampling speed and the frame delay amount is ten. However, since the sampling speed varies, the sampling speed weighting curve is calculated in advance for every sampling speed. When weighting the maximum point using the sampling speed weighting curve, the CPU 47 can select and use the sampling weighting curve of the frame delay amount corresponding to the sampling speed.

The CPU 47 can correct the history weighting factor $W_P$ of the history weighting curve and the sampling speed weighting factor $W_A$ of the sampling speed weighting curve in accordance with the weighted similarity degree of when the weighted maximum point becomes maximum in the previous yarn travelling speed acquiring processing. Specifically, provided that the weighted similarity degree is $S_P$ when the weighted maximum point becomes maximum in the previous yarn travelling speed acquiring processing, the corrected history weighting factor $W_P$' and the corrected sampling speed weighting factor $W_A$' are defined with the following equations (6) and (7).

$$W_P' = S_P \times W_P \qquad \cdots \quad (6)$$

$$W_A' = (2S' - S_P)W_A \cdots (7)$$

S' is a stable similarity factor, and a minimum value of the similarity degree, and the like, for example, can be set.

The correction of the history weighting factor and the sampling speed weighting factor emphasizes the influence of the history weighting factor $W_P$ when the similarity degree $S_P$ is large and emphasizes the influence of the sampling speed weighting factor when the similarity degree $S_P$ is small. This is based on the fact that if the previous similarity degree $S_P$ is large, the history weighting curve is assumed to have higher reliability than the sampling speed weighting curve. Therefore, the maximum point having a high reliability can be selected by performing the correction. Since the CPU 47 corrects the history weighting factor and the sampling speed weighting factor in accordance with the previous similarity degree, the CPU 47 thus also functions as the travelling information acquiring section 67 for correcting the history weighting factor and the sampling speed weighting factor.

The present embodiment is configured as described above, and the similarity degree evaluating section 65 creates the first imaginary frame in accordance with the first yarn thickness unevenness signal (first extracted signal) extracted with the first extracting condition from the first yarn thickness unevenness signal (first waveform data series), and creates the second imaginary frame in accordance with the second yarn thickness unevenness signal (second extracted signal) extracted with the second extracting condition from the second yarn thickness unevenness signal (second waveform data series). The similarity degree evaluating section 65 obtains a plurality of similarity degrees of the first yarn thickness unevenness signal (first extracted signal) and the second yarn thickness unevenness signal (second extracted signal) based on the first imaginary frame and the second imaginary frame. Therefore, by extracting the signals from the first yarn thickness unevenness signals (first waveform data series) and the second yarn thickness unevenness signals (second waveform data series), the number of signals of the first yarn thickness unevenness signals (first waveform data series) and the second yarn thickness unevenness signals (second waveform data series) within the first imaginary frame and the second imaginary fame can be reduced. The processing load in calculating the similarity degree can be reduced by obtaining the similarity degree using the first imaginary frame and the second imaginary frame in which the number of signals is reduced. Therefore, even if the acquiring number of the first yarn thickness unevenness signals (first waveform data series) and the second yarn thickness unevenness signals (second waveform data series) is increased to increase the resolution, the load in calculating the similarity degree can be reduced.

The similarity degree evaluating section 65 changes the second extracting condition for extracting the waveform data that configures the upstream frame and the first extracting condition for extracting the waveform data that configures the downstream frame in accordance with the sampling speed. The more appropriate upstream frame and the downstream frame corresponding to the sampling speed thus can be obtained. The similarity degree thus can be more appropriately calculated.

The weighting processing section 66 performs the weighting processing on each of a plurality of maximum points using the weighting curve (the history weighting curve and the sampling speed weighting curve) corresponding to the speed ratio in accordance with the frame delay amount of the first yarn thickness unevenness signal (first extracted signal) forming the first imaginary frame and the second yarn thickness unevenness signal (second extracted signal) forming the second imaginary frame. The weight can be appropriately set for every frame delay amount by using the weighting curve corresponding to the speed ratio based on the frame delay amount. Therefore, by using the weighting curve corresponding to the speed ratio based on the delay amount, the weighting processing can be more accurately performed and the travelling state of the yarn can be more accurately acquired.

The winder unit 10 includes the clearer 15 capable of calculating the travelling speed of the spun yarn 10, as described above, and thus performs a control of each section using the accurate travelling information of the spun yarn 10 acquired by the clearer 15.

One embodiment of the present invention has been described above, but the present invention is not limited to the above embodiment. For example, the spun yarn 20 is traversed on the surface of the package 30 while rotating the package 30 with the rotating winding drum 24 in the embodiment described above, but this is not the sole case, and the configuration of the present invention can be applied even with the yarn winding machine having a configuration in which the drive of the package and the traverse operation are independent. Such a yarn winding machine includes an automatic winder provided with an arm-type traverse device that traverses the spun yarn 20 with a swinging arm, and a belt-type traverse device that traverses the spun yarn 20 with a yarn hooking member that reciprocates to the left and the right by a belt.

The yarn travelling information acquiring device according to an embodiment of the present invention is not limited to being provided in the automatic winder, and may be provided in other yarn processing devices such as a fine spinning machine, and the like, for example.

In the above embodiment, the change in the light receiving amount is monitored by the yarn unevenness detecting sensors 43 and 44, but for example, a yarn unevenness detecting sensor of a type that detects the change in electrostatic capacitance of the travelling spun yarn 20 may be adopted. With such a configuration, the change in mass per unit length of the spun yarn 20 can be detected. In other words, the yarn unevenness detecting sensor is sufficient to be configured to detect the thickness unevenness of the spun yarn 20 by some kind of method.

The weighting curve does not need to be in a form of exponential function as described in the embodiment, and merely needs to be able to perform weighting in some form.

In the embodiment described above, the weighting curve (the history weighting curve and the sampling speed weighting curve) is defined as the exponential function (exp function), but the present invention is not limited thereto, and any function can be used for the definition of the weighting curve as long as the function has one maximum value.

Description has been made that the clearer 15 acquires the yarn travelling information such as the fixed yarn length pulse signal and the yarn travelling speed, but instead, the clearer 15 may be configured to acquire other yarn travelling information. For example, the clearer 15 may obtain the total length of the traveled spun yarn 20 by integrating the obtained yarn travelling speed by time.

In the clearer 15, for example, only the time delay $\Delta T$ of the waveforms may be obtained without calculating the yarn travelling speed. Since the time delay $\Delta T$ of the waveform generates when the spun yarn 20 travels, the time delay $\Delta T$ can be referred to as the travelling information of the spun yarn 20. In this case, the time delay $\Delta T$ of the waveform obtained by the clearer 15 is output to the unit control section 50, and calculation of the yarn travelling speed using $\Delta T$ can be carried out by the unit control section 50.

In the above embodiment, the yarn travelling speed calculated by the clearer 15 is output to the unit control section 50, but the yarn travelling speed may be output as numerical data or may be output in other forms. For example, the fixed yarn length pulse signal described above may be output to the unit control section 50.

Since the second A/D converter 46 arranged in the clearer 15 is provided for performing the FFT calculation, the second A/D converter 46 may be omitted if the FFT calculation is not carried out.

In the above embodiment, the sampling speed is acquired in accordance with the rotation pulse signal from the rotation sensor 42 configured as a rotary encoder, but the present invention is not limited thereto.

The above embodiment describes an example in which the history weighting curve and the sampling speed weighting curve are used as the weighting curve, but only either one of the weighting curves may be used.

In the above embodiment, the head position of the downstream frame is fixed, and the similarity degree is obtained while shifting the head position of the upstream frame. In place of this configuration, the head position of the upstream frame may be fixed, and the similarity degree may be obtained while shifting the head position of the downstream frame. The similarity degree may be obtained while shifting both the downstream frame and the upstream frame. However, if the downstream frame is fixed at a position including the most recent data of the waveform data included in the downstream ring buffer, the similarity degree can be calculated in real time while always using the most recent data.

In the above embodiment, the functions of the similarity degree evaluating section 65, the weighting processing section 66, the travelling information acquiring section 67, the yarn quality measuring section 68, the sampling speed acquiring section 72, the measuring section 73, and the like are realized by hardware and software, but some or all of these functions may be realized with a dedicated hardware.

## Claims

1. A yarn travelling information acquiring device comprising:

    a first detecting section (43) adapted to detect a thickness unevenness of a travelling yarn (20) and to output first yarn thickness unevenness signals;
    a second detecting section (44) arranged upstream in a yarn travelling direction at a distance from the first detecting section (43), and adapted to detect the thickness unevenness of the yarn (20) and to output second yarn thickness unevenness signals;
    sampling means (45) adapted to sample the first and second yarn thickness unevenness signals with a sampling speed selected to maintain the number of data acquired per unit length substantially constant;
    a similarity degree evaluating section (65) adapted to use a first imaginary frame and a second imaginary frame to select a plurality of reference positions of the first imaginary frame on a time axis of the second imaginary frame, and to evaluate a plurality of similarity degrees of the first yarn thickness unevenness signals and the second yarn thickness unevenness signals, the first imaginary frame being formed in accordance with the first yarn thickness unevenness signals extracted from the first yarn thickness unevenness signals acquired within a first time range, and the second imaginary frame being formed in accordance with the second yarn thickness unevenness signals extracted from the second yarn thickness unevenness signals acquired within a second time range that is longer than the first time range; and
    a travelling information acquiring section (67) adapted to calculate a time delay ($\Delta T$) between the first yarn thickness unevenness signals forming the first imaginary frame and the second yarn thickness unevenness signals forming the second imaginary frame in accordance with the similarity degrees, and to acquire travelling information of the yarn (20) in accordance with the distance and the time delay ($\Delta T$), with a sampling speed acquiring section (72) adapted to acquire a sampling speed of the yarn (20), **characterized in that**
    when the sampling speed acquired by the sampling speed acquiring section (72) is less than a threshold, the similarity degree evaluating section (65) is adapted to process all the first yarn thickness unevenness signals output by the first detecting section (43) and the second yarn thickness unevenness signals output by the second detecting section (44) extracted, and

when the sampling speed acquired by the sampling speed acquiring section (72) is equal to or greater than the threshold, the similarity degree evaluating section (65) is adapted to process only a part of the first yarn thickness unevenness signals output by the first detecting section (43) and of the second yarn thickness unevenness signals output by the second detecting section (44).

2. The yarn travelling information acquiring device according to any one of claim 1, **characterized by** a weighting processing section (66) adapted to carry out a weighting processing on the plurality of similarity degrees obtained by the similarity degree evaluating section (65) using a weighting factor designated by a weighting curve according to a speed ratio based on a delay amount of the first yarn thickness unevenness signals forming the first imaginary frame and the second yarn thickness unevenness signals forming the second imaginary frame, and to calculate a plurality of weighted similarity degrees, wherein

the travelling information acquiring section (67) is adapted to acquire the travelling information in accordance with the weighted similarity degrees on which the weighting processing has been carried out by the weighting processing section (66).

3. The yarn travelling information acquiring device according to claim 1 or claim 2, **characterized in that** the travelling information acquiring section (67) is adapted to acquire as the travelling information of the yarn, at least one of travelling speed of the yarn (20), a fixed-length pulse of the yarn (20), a moved length of the yarn (20) per unit time, and a time delay of a waveform of the first yarn thickness unevenness signals forming the first imaginary frame and a waveform of the second yarn thickness unevenness signals.

4. A yarn processing device **characterized by**:

   the yarn travelling information acquiring device (15) according to any one of claim 1 through claim 3;
   a yarn processing section (16) adapted to perform a processing on the yarn (20); and
   a control section (50) adapted to control the processing of the yarn processing section (16) in accordance with the travelling information of the yarn (20) acquired by the yarn travelling information acquiring device (15).

5. A yarn travelling information acquiring method comprising the following steps:

   detecting a thickness unevenness of a travelling yarn (20) by a first detecting section (43) and generating first yarn thickness unevenness signals;
   detecting the thickness unevenness of the yarn (20) by a second detecting section (44) located upstream in a yarn travelling direction at a distance from the first detecting section (43), and generating second yarn thickness unevenness signals;
   sampling the first and second yarn thickness unevenness signals with a sampling speed selected to maintain the number of data acquired per unit length substantially constant;
   using a first imaginary frame and a second imaginary frame, selecting a plurality of reference positions of the first imaginary frame on a time axis of the second imaginary frame, and evaluating a plurality of similarity degrees of the first yarn thickness unevenness signals and the second yarn thickness unevenness signals, forming the first imaginary frame in accordance with the first yarn thickness unevenness signals extracted from the first yarn thickness unevenness signals acquired within a first time range, and forming the second imaginary frame in accordance with the second yarn thickness unevenness signals extracted from the second yarn thickness unevenness signals acquired within a second time range that is longer than the first time range;
   calculating a time delay ($\Delta$T) between the first yarn thickness unevenness signals forming the first imaginary frame and the second yarn thickness unevenness signals forming the second imaginary frame in accordance with the similarity degrees, and generating travelling information of the yarn (20) in accordance with the distance and the time delay ($\Delta$T), acquiring a sampling speed of the yarn (20);

   **characterized in that**

   when the sampling speed acquired is less than a threshold, processing all of the first yarn thickness unevenness signals and the second yarn thickness unevenness signals, and
   when the sampling speed acquired is equal to or greater than the threshold, processing only a part of the first yarn thickness unevenness signals and of the second yarn thickness unevenness signals.

6. The yarn travelling information acquiring method according to claim 5, **characterized by** weighting the plurality of similarity degrees obtained using a weighting factor designated by a weighting curve according to a speed ratio based on a delay amount of the first yarn thickness unevenness signals forming the first imaginary frame and the second yarn thickness unevenness signals forming the second imaginary frame, and calculating a plurality of weighted similarity degrees, and

acquiring the travelling information in accordance with the weighted similarity degrees on which the weighting processing has been carried out.

**7.** The yarn travelling information acquiring method according to claim 5 or claim 6, **characterized by** acquiring as the travelling information of the yarn, at least one of travelling speed of the yarn (20), a fixed-length pulse of the yarn (20), a moved length of the yarn (20) per unit time, and a time delay of a waveform of the first yarn thickness unevenness signals forming the first imaginary frame and a waveform of the second yarn thickness unevenness signals.

**Patentansprüche**

**1.** Garnlaufinformation-Erfassungsvorrichtung, welche aufweist:

einen ersten Detektionsabschnitt (43), der dazu ausgelegt ist, eine Dickenungleichmäßigkeit eines laufenden Garns (20) zu detektieren und erste Garndickenungleichmäßigkeitssignale auszugeben;
einen zweite Detektionsabschnitt (44), der in Garnlaufrichtung mit Abstand stromauf von dem ersten Detektionsabschnitt (43) angeordnet und dazu ausgelegt ist, die Dickenungleichmäßigkeit des Garns (20) zu detektieren und zweite Garndickenungleichmäßigkeitssignale auszugeben;
Abtastmittel (45), die dazu ausgelegt sind, die ersten und zweiten Garndickenungleichmäßigkeitssignale mit einer Abtastgeschwindigkeit abzutasten, die ausgewählt ist, um die pro Längeneinheit erfasste Anzahl von Daten im Wesentlichen konstant zu halten;
einen Ähnlichkeitsgradauswertungsabschnitt (65), der dazu ausgelegt ist, einen ersten imaginären Rahmen und einen zweiten imaginären Rahmen zu verwenden, um eine Mehrzahl von Referenzpositionen des ersten imaginären Rahmens auf einer Zeitachse des zweiten imaginären Rahmens auszuwählen, und eine Mehrzahl von Ähnlichkeitsgraden der ersten Garndickenungleichmäßigkeitssignale und der zweiten Garndickenungleichmäßigkeitssignale auszuwerten, wobei der erste imaginäre Rahmen gemäß dem ersten Garndickenungleichmäßigkeitssignalen gebildet wird, die von den ersten Garndickenungleichmäßigkeitssignalen extrahiert werden, die innerhalb eines ersten Zeitbereichs erfasst werden, und der zweite imaginäre Rahmen gemäß den zweiten Garndickenungleichmäßigkeitssignalen gebildet wird, die von den zweiten Garndickenungleichmäßigkeitssignalen extrahiert werden, die innerhalb eines zweiten Zeitbereichs erfasst werden, der länger ist als der erste Zeitbereich; und
einen Laufinformationserfassungsabschnitt (67), der dazu ausgelegt ist, eine Zeitverzögerung (ΔT) zwischen den den ersten imaginären Rahmen bildenden ersten Garndickenungleichmäßigkeitssignalen und den den zweiten imaginären Rahmen bildenden zweiten Garndickenungleichmäßigkeitssignalen gemäß den Ähnlichkeitsgraden zu berechnen, und Laufinformation des Garns (20) gemäß Distanz und der Zeitverzögerung (ΔT) mit einem Abtastgeschwindigkeitserfassungsabschnitt (72) zu erfassen, der dazu ausgelegt ist, eine Abtastgeschwindigkeit des Garns (20) zu erfassen, **dadurch gekennzeichnet, dass**
wenn die vom Abtastgeschwindigkeitserfassungsabschnitt (72) erfasste Abtastgeschwindigkeit kleiner als ein Schwellenwert ist, der Ähnlichkeitsgradauswertungsabschnitt (65) dazu ausgelegt ist, alle der vom ersten Detektionsabschnitt (43) ausgegebenen ersten Garndickenungleichmäßigkeitssignale und der vom zweiten Detektionsabschnitt (44) ausgegebenen zweiten Garndickenungleichmäßigkeitssignale, die extrahiert sind, zu bearbeiten, und wenn die vom Abtastgeschwindigkeitserfassungsabschnitt (72) erfasste Abtastgeschwindigkeit gleich oder größer als der Schwellenwert ist, der Ähnlichkeitsgradauswertungsabschnitt (65) dazu ausgelegt ist, nur einen Teil der vom ersten Detektionsabschnitt (43) ausgegebenen ersten Garndickenungleichmäßigkeitssignale und der vom zweiten Detektionsabschnitt (44) ausgegebenen zweiten Garndickenungleichmäßigkeitssignale zu bearbeiten.

**2.** Die Garnlaufinformation-Erfassungsvorrichtung nach Anspruch 1, **gekennzeichnet durch** einen Gewichtungsprozessabschnitt (66), der dazu ausgelegt ist, einen Gewichtungsprozess an der Mehrzahl von vom Ähnlichkeitsgradauswertungsabschnitt (65) erhaltenen Ähnlichkeitsgraden mittels eines Gewichtungsfaktors auszuführen, der durch eine Gewichtungskurve bezeichnet ist, gemäß einem Geschwindigkeitsverhältnis basierend auf einem Verzögerungsbetrag der den ersten imaginären Rahmen bildenden ersten Garndickenungleichmäßigkeitssignale und der den zweiten imaginären Rahmen bildenden zweiten Garndickenungleichmäßigkeitssignale, und eine Mehrzahl von Gewichtungsähnlichkeitsgraden zu berechnen,
wobei der Laufinformationserfassungsabschnitt (67) dazu ausgelegt ist, die Laufinformation gemäß den gewichteten Ähnlichkeitsgraden zu erfassen, an denen der Gewichtungsprozess von dem Gewichtungsprozessabschnitt (66) ausgeführt worden ist.

3. Die Garnlaufinformation-Erfassungsvorrichtung nach Anspruch 1 oder Anspruch 2, **dadurch gekennzeichnet, dass** der Laufinformationserfassungsabschnitt (67) dazu ausgelegt ist, als die Laufinformation des Garns, zumindest eine/einen der Laufgeschwindigkeit des Garns (20), eines Festlängenpulses des Garns (20), einer pro Zeiteinheit bewegten Länge des Garns (20) und einer Zeitverzögerung eines Wellenverlaufs der den ersten imaginären Rahmen bildenden ersten Garndickenungleichmäßigkeitssignale und eines Wellenverlaufs der zweiten Garndickenungleichmäßigkeitssignale zu erfassen.

4. Garnverarbeitungsvorrichtung, **gekennzeichnet durch**:

   eine Garnlaufinformation-Erfassungsvorrichtung (15) nach einem von Anspruch 1 bis Anspruch 3;
   einen Garnbearbeitungsabschnitt (16), der dazu ausgelegt ist, an dem Garn (20) eine Bearbeitung durchzuführen; und
   einen Steuerabschnitt (50), der dazu ausgelegt ist, die Bearbeitung des Garnbearbeitungsabschnitts (16) gemäß der von der Garnlaufinformations-Erfassungsvorrichtung (15) erfassten Laufinformation des Garns (20) zu steuern.

5. Garnlaufinformation-Erfassungsverfahren, welches die folgenden Schritte aufweist:

   Detektieren einer Dickenungleichmäßigkeit eines laufenden Garns (20) mit einem ersten Detektionsabschnitt (43), und Erzeugen von ersten Garndickenungleichmäßigkeitssignalen;
   Detektieren der Dickenungleichmäßigkeit des Garns (20) mit einem zweiten Detektionsabschnitt (44), der in Garnlaufrichtung mit Abstand stromauf von dem ersten Detektionsabschnitt (43) angeordnet ist, und Erzeugen von zweiten Garndickenungleichmäßigkeitssignalen;
   Abtasten der ersten und zweiten Garndickenungleichmäßigkeitssignale mit einer Abtastgeschwindigkeit, die ausgewählt ist, um die pro Längeneinheit erfasste Anzahl von Daten im Wesentlichen konstant zu halten;
   Verwenden eines ersten imaginären Rahmens und eines zweiten imaginären Rahmens, Auswählen einer Mehrzahl von Referenzpositionen des ersten imaginären Rahmens auf einer Zeitachse des zweiten imaginären Rahmens, und Auswerten einer Mehrzahl von Ähnlichkeitsgraden der ersten Garndickenungleichmäßigkeitssignale und der zweiten Garndickenungleichmäßigkeitssignale, Bilden des ersten imaginären Rahmens gemäß den ersten Garndickenungleichmäßigkeitssignalen, die aus den ersten Garndickenungleichmäßigkeitssignalen extrahiert sind, die innerhalb eines ersten Zeitbereichs erfasst werden, und Bilden des zweiten imaginären Rahmens gemäß den zweiten Garndickenungleichmäßigkeitssignalen, die von den zweiten Garndickenungleichmäßigkeitssignalen extrahiert sind, die innerhalb eines zweiten Zeitbereichs erfasst werden, der länger ist als der erste Zeitbereich;
   Berechnen einer Zeitverzögerung ($\Delta$T) zwischen den den ersten imaginären Rahmen bildenden ersten Garndickenungleichmäßigkeitssignalen und den den zweiten imaginären Rahmen bildenden zweiten Garndickenungleichmäßigkeitssignalen gemäß den Ähnlichkeitsgraden, und Erzeugen von Laufinformation des Garns (20) gemäß der Distanz und der Zeitverzögerung ($\Delta$T), Erfassen einer Abtastgeschwindigkeit des Garns (20);
   **dadurch gekennzeichnet, dass** dann, wenn die erfasste Abtastgeschwindigkeit kleiner als ein Schwellenwert ist, alle der ersten Garndickenungleichmäßigkeitssignale und der zweiten Garndickenungleichmäßigkeitssignale bearbeitet werden, und
   wenn die erfasste Abtastgeschwindigkeit gleich oder größer als der Schwellenwert ist, nur ein Teil der ersten Garndickenungleichmäßigkeitssignale und der zweiten Garndickenungleichmäßigkeitssignale bearbeitet wird.

6. Das Garnlaufinformation-Erfassungsverfahren nach Anspruch 5, **gekennzeichnet durch** Gewichten der Mehrzahl von erhaltenen Ähnlichkeitsgraden mittels eines Gewichtungsfaktors, der durch eine Gewichtungskurve bezeichnet ist, gemäß einem Geschwindigkeitsverhältnis basierend auf einem Verzögerungsbetrag der den ersten imaginären Rahmen bildenden ersten Garndickenungleichmäßigkeitssignale und der den zweiten imaginären Rahmen bildenden zweiten Garndickenungleichmäßigkeitssignale, und Berechnen einer Mehrzahl von gewichteten Ähnlichkeitsgraden, und
Erfassen der Laufinformation gemäß den gewichteten Ähnlichkeitsgraden, an denen der Gewichtungsprozess ausgeführt worden ist.

**7.** Das Garnlaufinformation-Erfassungsverfahren nach Anspruch 5 oder Anspruch 6, **gekennzeichnet durch** das Erfassen, als Laufgeschwindigkeit des Garns (20), von zumindest einer/einem der Laufgeschwindigkeit des Garns (20), eines Festlängenpulses des Garns (20), einer pro Zeiteinheit bewegten Länge des Garns (20) und einer Zeitverzögerung eines Wellenverlaufs der den ersten imaginären Rahmen bildenden ersten Garndickenungleichmäßigkeitssignale und eines Wellenverlaufs der zweiten Garndickenungleichmäßigkeitssignale.

**Revendications**

**1.** Un dispositif d'acquisition d'informations de déplacement de fil, comprenant :

une première section de détection (43) adaptée pour détecter une inégalité d'épaisseur d'un fil en déplacement (20) et pour émettre des premiers signaux d'inégalité d'épaisseur de fil ;
une deuxième section de détection (44) arrangée en amont dans un sens de déplacement de fil à une distance de la première section de détection (43) et adaptée pour détecter l'inégalité d'épaisseur de fil (20) et pour émettre des deuxièmes signaux d'inégalité d'épaisseur de fil ;
des moyens d'échantillonnage (45) adaptés pour échantillonner les premiers et deuxièmes signaux d'inégalité d'épaisseur de fil avec une vitesse d'échantillonnage sélectée pour maintenir le nombre de dates acquises par longueur d'unité essentiellement constante ;
une section évaluant le degré de similarité (65) adaptée pour utiliser un premier cadre imaginaire et un deuxième cadre imaginaire pour sélecter une pluralité de positions de référence du premier cadre imaginaire sur un axe temporel du deuxième cadre imaginaire et pour évaluer une pluralité de degré de similarité des premiers signaux d'inégalité d'épaisseur de fil et des deuxièmes signaux d'inégalité d'épaisseur de fil, le premier cadre imaginaire étant formé en accord avec les premiers signaux d'inégalité d'épaisseur de fil extraits des premiers signaux d'inégalité d'épaisseur de fil acquis dans une première période et le deuxième cadre imaginaire étant formé en conformité avec les deuxièmes signaux d'inégalité d'épaisseur de fil extraits des deuxièmes signaux d'inégalité d'épaisseur de fil acquis dans une deuxième période qui est plus longue que la première période ; et
une section d'acquisition d'informations de déplacement (67) adaptée pour calculer un délai de temporisation (ΔT) entre les premiers signaux d'inégalité d'épaisseur de fil formant le premier cadre imaginaire et les deuxièmes signaux d'inégalité d'épaisseur de fil formant le deuxième cadre imaginaire en conformité avec les degrés de similarité et pour acquérir des informations de déplacement du fil (20) en conformité avec la distance et le délai de temporisation (ΔT), avec une section d'acquisition de vitesse d'échantillonnage (72) adaptée pour acquérir une vitesse d'échantillonnage du fil (20) **caractérisé en ce que**
quand la vitesse d'échantillonnage acquise par la section d'acquisition de vitesse d'échantillonnage (72) est inférieure à un seuil limite, la section évaluant le degré de similarité (65) est adaptée pour traiter tous les premiers signaux d'inégalité d'épaisseur de fil émis par la première section de détection (43) et les deuxièmes signaux d'inégalité d'épaisseur de fil émis par la deuxième section de détection (44) extraits, et
quand la vitesse d'échantillonnage acquise par la section d'acquisition de vitesse d'échantillonnage (72) est égale ou supérieure à un seuil limite, la section évaluant le degré de similarité (65) est adaptée pour traiter seulement une partie des premiers signaux d'inégalité d'épaisseur de fil émis par la première section de détection (43) et des deuxièmes signaux d'inégalité d'épaisseur de fil émis par la deuxième section de détection (44).

**2.** Le dispositif d'acquisition d'informations de déplacement de fil selon la revendication 1, **caractérisé par** une section de traitement de pondération (66) adaptée pour exécuter un traitement de pondération pour la pluralité de degrés de similarité obtenus par la section évaluant le degré de similarité (65) utilisant un facteur de pondération désigné par une courbe de pondération en conformité avec un rapport de vitesse basé sur un montant de délai des premiers signaux d'inégalité d'épaisseur de fil formant le premier cadre imaginaire et les deuxièmes signaux d'inégalité d'épaisseur de fil formant le deuxième cadre imaginaire et pour calculer une pluralité de degrés de similarité pondérés, où
la section d'acquisition d'informations de déplacement (67) est adaptée pour acquérir les informations de déplacement de fil en conformité avec les degrés de similarité pondérés sur lesquels le processus de pondération a été réalisé par la section de traitement de pondération (66).

**3.** Le dispositif d'acquisition d'informations de déplacement de fil selon les revendications 1 ou 2, **caractérisé en ce que** la section d'acquisition d'informations de déplacement (67) est adaptée pour acquérir en tant qu'information du fil au moins un parmi vitesse de déplacement du fil (20), une pulsation de longueur fixe du fil (20), une longueur déplacée du fil (20) par unité temporelle et un délai de temporisation d'une onde des premiers signaux d'inégalité d'épaisseur de fil formant le premier cadre imaginaire et une onde des deuxièmes signaux d'inégalité d'épaisseur de fil.

4. Un dispositif de traitement de fil **caractérisé par** :

le dispositif d'acquisition d'informations de déplacement de fil (15) selon une des revendications 1 à 3 ;
une section de traitement de fil (16) adaptée pour réaliser un traitement du fil (20) ; et
une section de contrôle (50) adaptée pour contrôler le traitement de la section de traitement de fil (16) en conformité avec les informations de déplacement du fil (209 acquises par le dispositif d'acquisition d'informations de déplacement de fil (15).

5. Un procédé d'acquisition d'informations de déplacement de fil comprenant les étapes suivantes :

détecter une inégalité d'épaisseur d'un fil en mouvement (20) à l'aide d'une première section de détection (43) et générer des premiers signaux d'inégalité d'épaisseur de fil ;
détecter l'inégalité d'épaisseur du fil (20) à l'aide d'une deuxième section de détection (44) arrangée en amont dans un sens de déplacement de fil à une distance de la première section de détection (43) et générer des deuxièmes signaux d'inégalité d'épaisseur de fil ;
échantillonner les premiers et deuxièmes signaux d'inégalité d'épaisseur de fil avec une vitesse d'échantillonnage sélectée pour maintenir essentiellement constant le nombre de dates acquises par longueur d'unité;
utiliser un premier cadre imaginaire et un deuxième cadre imaginaire pour sélecter une pluralité de positions de référence du premier cadre imaginaire sur un axe temporel du deuxième cadre imaginaire et évaluer une pluralité de degré de similarité des premiers signaux d'inégalité d'épaisseur de fil et des deuxièmes signaux d'inégalité d'épaisseur de fil, former le premier cadre imaginaire en accord avec les premiers signaux d'inégalité d'épaisseur de fil extraits des premiers signaux d'inégalité d'épaisseur de fil acquis dans une première période et former le deuxième cadre imaginaire en conformité avec les deuxièmes signaux d'inégalité d'épaisseur de fil extraits des deuxièmes signaux d'inégalité d'épaisseur de fil acquis dans une deuxième période qui est plus longue que la première période ;
calculer un délai de temporisation ($\Delta$T) entre les premiers signaux d'inégalité d'épaisseur de fil formant le premier cadre imaginaire et les deuxièmes signaux d'inégalité d'épaisseur de fil formant le deuxième cadre imaginaire en conformité avec les degrés de similarité et générer des informations de déplacement du fil (20) en conformité avec la distance et le délai de temporisation ($\Delta$T), acquérissant une vitesse d'échantillonnage du fil (20) **caractérisé en ce que**
quand la vitesse d'échantillonnage acquise est inférieure à un seuil limite, traiter tous les premiers signaux d'inégalité d'épaisseur de fil et les deuxièmes signaux d'inégalité d'épaisseur de fil, et
quand la vitesse d'échantillonnage acquise est égale ou supérieure à un seuil limite, traiter seulement une partie des premiers signaux d'inégalité d'épaisseur de fil et des deuxièmes signaux d'inégalité d'épaisseur de fil.

6. Le procédé d'acquisition d'informations de déplacement de fil selon la revendication 5, **caractérisé par** la pondération de la pluralité de degrés de similarité obtenus utilisant un facteur de pondération désigné par une courbe de pondération en conformité avec un rapport de vitesse basé sur un montant de délai des premiers signaux d'inégalité d'épaisseur de fil formant le premier cadre imaginaire et les deuxièmes signaux d'inégalité d'épaisseur de fil formant le deuxième cadre imaginaire et calculer une pluralité de degrés de similarité pondérés, et
acquérir les informations de déplacement de fil en conformité avec les degrés de similarité pondérés sur lesquels le processus de pondération a été réalisé.

7. Le procédé d'acquisition d'informations de déplacement de fil selon les revendications 5 ou 6, **caractérisé par** l'acquisition en tant qu'information du fil au moins un parmi vitesse de déplacement du fil (20), une pulsation de longueur fixe du fil (20), une longueur déplacée du fil (20) par unité temporelle et un délai de temporisation d'une onde des premiers signaux d'inégalité d'épaisseur de fil formant le premier cadre imaginaire et une onde des deuxièmes signaux d'inégalité d'épaisseur de fil.

FIG. 1

FIG. 2

FIG. 3

CPU — 52

- SIMILARITY DEGREE EVALUATING SECTION — 65
- WEIGHTING PROCESSING SECTION — 66
- TRAVELLING INFORMATION ACQUIRING SECTION — 67
- YARN QUALITY MEASURING SECTION — 68
- SAMPLING SPEED ACQUIRING SECTION — 72
- MEASURING SECTION — 73

47

48 — DOWNSTREAM RING BUFFER
55

RAM

UPSTREAM RING BUFFER — 56

15

AD2 — 46
AD
AD1
AD — 45

FIRST YARN UNEVENNESS DETECTING SENSOR — 43
SECOND YARN UNEVENNESS DETECTING SENSOR — 44

49

LED — 36
LED — 37

20

30
24
42
22

# FIG. 4

SIGNAL LEVEL

FIRST
TIME RANGE

DOWNSTREAM
RING
BUFFER

[0]     [32]     [64]     [96]     [127]

index

TIME DELAY OF
WAVEFORMS

SIGNAL LEVEL

SECOND TIME RANGE

UPSTREAM
RING
BUFFER

[0]     [32]     [64]     [96]     [127]

index

# FIG. 5

# FIG. 6

DOWNSTREAM FRAME

MINIMUM VALUE

BIAS REMOVAL

BIAS REMOVED DOWNSTREAM FRAME

NORMAL-IZATION

NORMALIZED DOWNSTREAM FRAME

UPSTREAM FRAME

MINIMUM VALUE

BIAS REMOVAL

BIAS REMOVED UPSTREAM FRAME

NORMAL-IZATION

NORMALIZED UPSTREAM FRAME

OVER-LAP

## FIG. 7

SIMILARITY
DEGREE

DELAY AMOUNT

## FIG. 8

SIMILARITY
DEGREE

DELAY AMOUNT

# FIG. 9

START

BIAS COMPONENT REMOVAL PROCESSING AND NORMALIZATION PROCESSING OF DOWNSTREAM FRAME — S101

INITIALIZE DELAY AMOUNT OF UPSTREAM FRAME — S102

BIAS COMPONENT REMOVAL PROCESSING AND NORMALIZATION PROCESSING OF UPSTREAM FRAME — S103

CALCULATE SIMILARITY DEGREE — S104

SAVE DELAY AMOUNT OF WHICH SIMILARITY DEGREE BECOMES MAXIMUM POINT — S105

MOVEMENT RANGE OF FRAME FINISHED? — S106

NO

MOVE UPSTREAM FRAME — S107

YES

ADOPTION DETERMINATION PROCESSING — S108

CALCULATE SPEED IN ACCORDANCE WITH ADOPTED DELAY AMOUNT — S109

END

# FIG. 10

```
      ┌──────────────────────────────┐
      │   ADOPTION DETERMINATION     │
      │        PROCESSING            │
      └──────────────────────────────┘
                    │
      ┌──────────────────────────────┐
      │   WEIGHTING PROCESSING       │  S201
      │   ON MAXIMUM POINT           │
      └──────────────────────────────┘
                    │
      ┌──────────────────────────────┐
      │   EXTRACT LARGEST WEIGHTED   │  S202
      │   MAXIMUM POINT              │
      └──────────────────────────────┘
                    │
              MAXIMUM              S203
          WEIGHTED MAXIMUM                   NO
          POINT EXISTS IN
              PLURALS?
                    │ YES
      ┌──────────────────────────────┐
      │ EXTRACT MAXIMUM POINT HAVING │  S204
      │ LARGEST SIMILARITY DEGREE OF │
      │ MAXIMUM POINTS BEFORE WEIGHTING │
      └──────────────────────────────┘
                    │
              MAXIMUM              S205
          POINT OF WHICH
          SIMILARITY DEGREE                  NO
        BEFORE WEIGHTING BECOMES
          MAXIMUM EXISTS IN
              PLURALS?
                    │ YES
      ┌──────────────────────────────┐
      │ EXTRACT MAXIMUM POINT CLOSE TO │  S206
      │ PREVIOUS DELAY AMOUNT          │
      └──────────────────────────────┘
                    │
                 ( END )
```

FIG. 11

# FIG. 12A

SIMILARITY
DEGREE

WEIGHTING
FACTOR

RAW
SIMILARITY
DEGREE

WEIGHTING
CURVE

1

1

0

0              16             32

DELAY AMOUNT (c_index)

WEIGHT-
ING

WEIGHTED
SIMILARITY
DEGREE

1

SHIFT OF
MAXIMUM POINT

0

0         c_max_index         32

DELAY AMOUNT (c_index)

# FIG. 12B

SIMILARITY DEGREE

WEIGHTING FACTOR

RAW SIMILARITY DEGREE

WEIGHTING CURVE

1

1

0

0          16          32

DELAY AMOUNT (c_index)

WEIGHT-ING

WEIGHTED SIMILARITY DEGREE

INCREASE IN NUMBER OF MAXIMUM POINTS

1

0

0     c_max_index     32

DELAY AMOUNT (c_index)

# FIG. 13

## FIG. 14A

SPEED
RATIO

| · · · | 10/7 | 10/8 | 10/9 | 10/10 | 10/11 | 10/12 | 10/13 | 10/14 | 10/15 | 10/16 | · · · |
|-------|------|------|------|-------|-------|-------|-------|-------|-------|-------|-------|

B ⌐ (above 10/11)  A ⌐ (above 10/13)

## FIG. 14B

FIRST
HISTORY
CORREC-
TION
SPEED

| · · · | 13/7 | 13/8 | 13/9 | 13/10 | 13/11 | 13/12 | 13/13 | 13/14 | 13/15 | 13/16 | · · · |
|-------|------|------|------|-------|-------|-------|-------|-------|-------|-------|-------|

C (below 13/11)  D (below 13/13)

## FIG. 14C

SECOND
HISTORY
CORREC-
TION
SPEED

| · · · | 7/13 | 8/13 | 9/13 | 10/13 | 11/13 | 12/13 | 13/13 | 13/14 | 13/15 | 13/16 | · · · |
|-------|------|------|------|-------|-------|-------|-------|-------|-------|-------|-------|

FIG. 14D

## FIG. 15A

| SPEED RATIO | ··· | 10/7 | 10/8 | 10/9 | **10/10** | 10/11 | 10/12 | 10/13 | 10/14 | ··· |
|---|---|---|---|---|---|---|---|---|---|---|

E

## FIG. 15B

| SAMPLING SPEED CORRECTION SPEED RATIO | ··· | **7/10** | **8/10** | **9/10** | **10/10** | 10/11 | 10/12 | 10/13 | 10/14 | ··· |
|---|---|---|---|---|---|---|---|---|---|---|

## FIG. 15C

DELAY AMOUNT (c_index)

**EP 2 645 194 B1**

**Patent documents cited in the description**

- JP 2012051672 A
- EP 2423144 A2
- EP 2090538 A2